# EUROPEAN PATENT APPLICATION

(11) **EP 3 348 952 A1**
(43) Date of publication of application: **18.07.2018**
(21) Application number: 16844544.3
(22) Date of filing: 31.03.2016
(51) Int. Cl.: F41J 3/02, F41J 3/00, F41J 5/04, G09B 19/00

(54) **METHOD, APPARATUS, AND COMPUTER PROGRAM STORED ON COMPUTER READABLE MEDIUM FOR PROVIDING DART GAME LESSON MODE**

(30) Priority: 08.09.2015 KR 20150127156
(71) Applicant: Hong International Corp., Seoul 08390 (KR)
(72) Inventor: HONG, Sang Uk, Seoul 06075 (KR)
(74) Representative: Becker Kurig Straus
(86) International application number: PCT/KR2016/003360
(87) International publication number: WO 2017/043724

(57) **Abstract**

Disclosed is a dart game apparatus. The dart game apparatus may include: a dart target including a bullseye disposed at the center, a plurality of concentric circles and disposed around the bullseye and a plurality of regions divided by straight lines which extend radially from the bullseye; a sensing unit sensing a hit location of a thrown dart pin; a camera unit including a camera disposed to photograph at least a part of a dart game player; a controller providing a lesson mode for a throwing motion of the dart game player and generating a lesson image for the throwing motion of the dart game player; and a display unit outputting at least one of an image based on an image photographed by the camera unit and a lesson image associated with a lesson for the throwing motion of the dart game player.

## Description

### [Technical Field]

The present disclosure relates to a dart game apparatus, and more particularly, to providing a lesson mode for a throwing operation of a dart game player to a user.

### [Background Art]

In general, a dart refers to a 'small arrow' and is a game that makes marks by throwing an arrow-shaped dart to a centrifugal target marked with figures. The dart game has an advantage in that anybody can enjoy the dart game anytime and anywhere if there are only an arrow-headed dart and the dart target. In recent years, as various game methods have been developed and scoring methods have been organized, the dart game has been developed as worldwide leisure sport, and therefore, men and women of all ages have conveniently enjoyed the dart game.

In general, participants of the dart game need to participate in the game at the same time and in the same space in order to enjoy the dart game. However, with the development of a communication technology, electronic dart game apparatuses have been developed in which each of the participants of the dart game may remotely participate in the dart game so as to participate in the game over temporal and spatial constraints and remotely transmit his/her play result or play process through a communication network. The electronic dart game apparatuses may electrically sense a hitting point of the dart target and automatically aggregate scores and provide the aggregated scores to a player.

In dart game play, a posture of throwing the dart pin can affect a hit location of the dart pin. For example, in an aiming step of aiming the dart pin, when an arm of the player is not perpendicular to the ground, the hit location of the dart pin can be deflected to the left or right of the location aimed at. In a step of throwing the dart pin, when a head of the player is moved, the hit location of the dart pin can be deflected from the location aimed at. In general, a dart game player has his/her own habit of a throwing posture, the dart game player makes repeated mistakes due to his own throwing posture, and throwing accuracy of the dart pin is reduced. A dart professional player can receive correction for a correct throwing posture, but it is difficult to receive the throwing posture from the professional dart player in reality because a lot of cost and time are required.

Thus, there may be a demand in the art for a method for correcting the throwing posture at lower cost.

### [Disclosure]

### [Technical Problem]

The present disclosure is contrived in response to the background art and has been made in an effort to provide a lesson mode for a dart throwing operation in a dart game apparatus.

The present disclosure has been made in an effort to provide a lesson to correct a throwing operation to a dart game player.

### [Technical Solution]

Disclosed is a dart game apparatus according to an embodiment of the present disclosure for implementing the aforementioned objects. The dart game apparatus may include: a dart target including a bullseye disposed at the center, a plurality of concentric circles disposed around the bullseye and a plurality of regions divided by straight lines which extend radially from the bullseye; a sensing unit sensing a hit location of a thrown dart pin; a camera unit including a camera disposed to photograph at least a part of a dart game player; a controller providing a lesson mode for a throwing motion of the dart game player and generating a lesson image for the throwing motion of the dart game player; and a display unit outputting at least one of an image based on an image photographed by the camera unit and a lesson image associated with a lesson for the throwing motion of the dart game player.

According to an embodiment of the present disclosure, disclosed is a method for providing a lesson mode for a throwing motion in a dart game apparatus. The method may include: providing the lesson mode for the throwing motion of a dart game player; photographing at least a part of the dart game player; generating a lesson image for the throwing motion of the dart game player; and outputting at least one of an image based on the photographed image and the lesson image for the throwing motion of the dart game player.

According to an embodiment of the present disclosure, disclosed is a computer program stored on a computer readable recording medium, which provides a lesson mode for a throwing motion in a dart game apparatus. The computer program may include the following commands for allowing a computer to provide a dart game lesson mode, and the commands may include: a command for providing a lesson mode for a throwing motion of a dart game player; a command for photographing at least a part of the dart game player; a command for generating a lesson image for the throwing motion of the dart game player; and a command for outputting at least one of an image based on the photographed image and the lesson image for the throwing motion of the dart game player.

### [Advantageous Effects]

According to the present disclosure, a lesson mode for a dart throwing operation can be provided in a dart game apparatus.

According to the present disclosure, a lesson to correct a throwing operation can be provided to a dart game player.

### [Description of Drawings]

Various aspects are now described with reference to the drawings and like reference numerals are generally used to designate like elements. In the following embodiments, for a description purpose, multiple specific detailed matters are presented to provide general understanding of one or more aspects. However, it will be apparent that the aspect(s) can be executed without the detailed matters. In other examples, known structures and apparatuses are illustrated in a block diagram form in order to facilitate description of the one or more aspects.
FIG. 1 is a block diagram of a dart game apparatus according to an embodiment of the present disclosure.
FIG. 2 is a perspective view of the dart game apparatus according to an embodiment of the present disclosure.
FIG. 3 is a conceptual view of a dart game network including a plurality of game data game apparatuses and servers according to an embodiment of the present disclosure.
FIG. 4 illustrates a dart target associated with an embodiment of the present disclosure.
FIG. 5 is a flowchart for describing a dart game match-up mode associated with another embodiment of the present disclosure.
FIG. 6 is a diagram for describing an embodiment of a first image among embodiments of the present disclosure.
FIG. 7 is a diagram for describing an embodiment of a third image among the embodiments of the present disclosure.
FIG. 8 is a diagram illustrating an image associated with throwing of a dart pin by a virtual player among the embodiments of the present disclosure.
FIG. 9 is a diagram for describing an embodiment of selecting the virtual player among the embodiments of the present disclosure.
FIG. 10 is a diagram for describing dart game play of the virtual player among the embodiments of the present disclosure.
FIG. 11 is a diagram for describing an accuracy rate of the virtual player among the embodiments of the present disclosure.
FIG. 12 is a diagram for describing that the accuracy rate of the virtual player is set as an asymmetric probability distribution among the embodiments of the present disclosure.
FIG. 13 is a flowchart for describing a dart game lesson mode associated with an embodiment of the present disclosure.
FIGS. 14A and 14B are diagrams for describing an embodiment of a first lesson image among the embodiments of the present disclosure.
FIG. 15 is a diagram for describing an embodiment of a second lesson image among the embodiments of the present disclosure.
FIG. 16 is a diagram for describing an embodiment of a second lesson image among the embodiments of the present disclosure.
FIG. 17 is a diagram for describing an embodiment of a second lesson image among the embodiments of the present disclosure.
FIG. 18 is a diagram for describing an embodiment of a third lesson image among the embodiments of the present disclosure.
FIG. 19 is a diagram for describing an embodiment of a fourth lesson image among the embodiments of the present disclosure.

### [Best Mode]

Various embodiments will now be described with reference to drawings and like reference numerals are used to refer to like elements throughout all drawings. In the specification, various descriptions are presented to provide appreciation of the present disclosure. However, it is apparent that the embodiments can be executed without the specific description. In other examples, known structures and apparatuses are presented in a block diagram form in order to facilitate description of the embodiments.

"Component", "module", "system", and the like which are terms used in the specification refer to a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or the execution thread and one component may be localized in one computer or distributed among two or more computers. Further, the components may be executed by various computer-readable media having various data structures, which are stored therein. The components may perform communication through local and/or remote processing according to a signal (for example, data from one component that interacts with other components and/or data through another system and a network such as the Internet through a signal in a local system and a distribution system) having one or more data packets, for example.

The description of the presented embodiments is provided so that those skilled in the art of the present disclosure use or implement the present disclosure. Various modifications of the embodiments will be apparent to those skilled in the art and general principles defined herein can be applied to other embodiments without departing from the scope of the present disclosure. Therefore, the present disclosure is not limited to the embodiments presented herein, but should be analyzed within the widest range which is coherent with the principles and new features presented herein.

The terms "dart" and "dart pin" used in the specification may be often used to be exchanged with each other. Moreover, the terms "player" and "user" used in the specification may also be often used to be exchanged with each other. Moreover, the terms "point" and "region" used in the specification may also be often used to be exchanged with each other.

Further, the terms "display" and "monitor" used in the specification may often be used to be replaced with each other.

In addition, the term "player" used in the specification may include "real player" and "virtual player". The real player means a user that actually exists and plays a dart game. The virtual player means a player that does not actually exist in reality and may play the dart game by using a dart game apparatus.

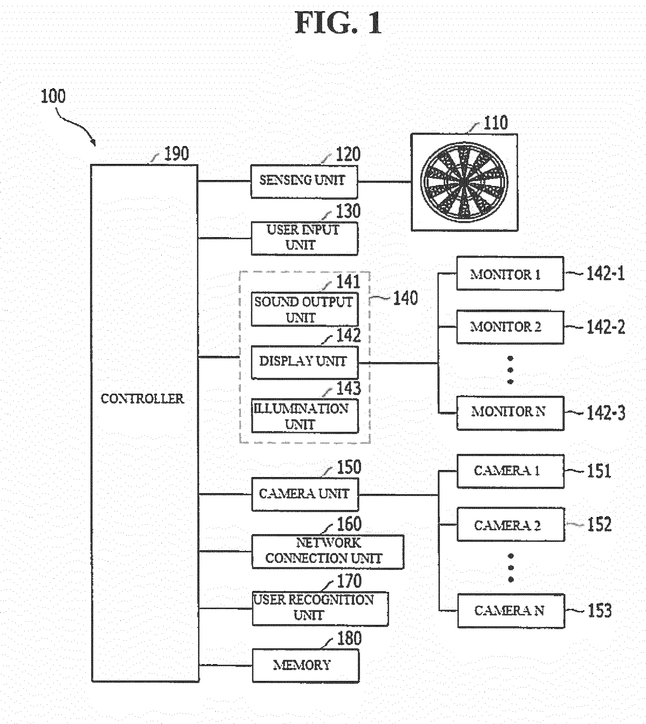

FIG. 1 is a block diagram of a dart game apparatus according to an embodiment of the present disclosure.

The dart game apparatus 100 may include a dart target 110, a sensing unit 120, a user input unit 130, an output unit 140, a camera unit 150, a communication unit 160, a user recognition unit 170, a memory 180, a controller 190, and the like. The components illustrated in FIG. 1 are not required. Therefore, a mobile terminal having more components therethan or less components therethan may be implemented.

Hereinafter, the components will be described in sequence.

The dart target 110 may include a score board in which a bullseye is positioned at the center and there are regions segmented by a concentric circle centering the bullseye and straight lines extended radially from the bullseye and granted with individual scores, respectively. Multiple holes into which a tip of a dart may be inserted may be formed on the score board.

The dart target 110 includes a display unit 142 to be described below to variably change score deployments of the dart target 110 and shapes of regions granted with the scores. In this case, the dart target 110 includes a light transmissive touch pad in the display unit 142 to be stacked to take a form of a touch screen.

The sensing unit 120 may sense the play of a dart game player (e.g., a real player) performed with respect to the dart target 110. The sensing unit 120 may sense a hit location of a dart pin so as to actually evaluate the play of the game player. The sensing unit 120 may sense which region of the dart target 110 a thrown dart hits, with respect to play in which the game player throws the dart. The sensing unit 120 electrically converts a score corresponding to the region in which the dart sticks to transmit the converted score to the controller 190. Further, the controller 190 may acquire a score corresponding to a hit location based on the hit location of the dart, which is acquired from the sensing unit 120.

The user input unit 130 receives an input of the user for controlling the dart game apparatus 100. The user input unit 130 may include a keypad, a dome switch, a touch pad (resistive/capacitive), a jog wheel, a jog switch, and the like. The user input unit 130 may also include cameras 151 to 153, a microphone, or the like.

The user input unit 130 may also include a short-range communication unit (not illustrated). The user input unit 130 may be configured to include the short-range communication unit (not illustrated) of the communication unit 160. When the user input unit 130 includes the short-range communication unit of the communication unit 160, the user input unit 130 may be configured to receive the user input which is input by an external console device. As short-range communication technology, Bluetooth, radio frequency identification (RFID), infrared data association (IrDA), ultra wideband (UWB), ZigBee, or the like may be used.

For example, when the user input unit 130 performs the short range communication using infrared communication, the external console device may be an infrared remote controller. Alternatively, when the user input unit 130 performs the short range communication using a Bluetooth function, the external console device may be a mobile device including a Bluetooth module. The mobile device including the Bluetooth module may be, for example, a smart phone including the Bluetooth module.

The user may select a dart game mode, the number of dart game players, a dart game play mode, and the like through the user input unit 130. For example, the user may select the number of dart game players, the dart game play mode (a zero one game, a cricket game, and the like), and the dart game mode (a single play, a network play, and the like) through the user input unit 130. Further, according to an embodiment of the present disclosure, the user may select the virtual player through the user input unit 130.

Further, the user may select a dart game match-up mode that may be played together with the virtual player through the user input unit 130. For example, the user may select "With mode" to play as one team with the virtual player via the user input unit 130 or "Vs mode" to play as a different team from the virtual player.

Further, the user may select a dart game lesson mode to lesson a dart throwing operation through the user input unit 130. For example, the user may select a virtual player lesson mode to take a lesson for a throwing operation from the virtual player through the user input unit 130. Further, the user may select from which virtual player the user will take the lesson through the user input unit 130.

The user input unit 130 may receive an input to adjust one or more lines for lesson for the throwing operation from the dart game player to match each part of a body of the dart game player. The dart game player may adjust one or more lines 1450, 1460, and 1470 of an image displayed in the display unit 142 to match each part of the body thereof through the user input unit 130.

The user input unit 130 receives a signal by sensing a key operation or a touch input of the user or receives speech or a motion through the cameras 151 to 153 or the microphone of the user to convert the received signal, speech, or motion into an input signal. To this end, a known speech recognition technology or motion recognition technologies may be used.

The output unit 140 which is used for generating an output related with sight, hearing, or touch may include a sound output unit 141, a display unit 142, an illumination unit 143, and the like.

The sound output unit 141 may output audio data received from the communication unit 160 or stored in the memory 180 in a game sound effect, a game motion guide, a game method description, and the like. The sound output unit 141 may output a sound signal related with a function (e.g., a game effect sound) performed by the dart game apparatus 100. The sound output unit 141 may also output a speech from a game player or a third person using another dart game apparatus, which is received through the communication unit 160. The sound output unit 141 may include a receiver, a speaker, a buzzer, and the like.

The display unit 142 displays (outputs) information processed in the dart game apparatus 100. For example, when the dart game apparatus 100 is in a game play method guidance mode, the display unit 142 may output a selectable game play method. When the dart game apparatus 100 is playing a game, the display unit 142 may output an image acquired by photographing the game player or the third person using another dart game apparatus received through the communication unit 160.

Further, the display unit 142 may display a dart game image. According to an embodiment of the present disclosure, the dart game image may include a dart game play image of a real person, a dart game play animation image of a character of the real person, a dart game play animation image of a virtual character, and an image displaying an image in which the dart pin hits the dart target for each team.

Further, the display unit 142 may display a lesson image. According to an embodiment of the present disclosure, a lesson image may include an image including an image acquired by adding one or more lines which may match each part of the body of the player to the image acquired by photographing the throwing operation of the player and the lesson image of the virtual player. The display unit 142 may output the image based on the image photographed by the camera unit 150 and the lesson image related to the lesson for the throwing operation of the dart game player. The image photographed by the camera unit 150 may include an image acquired by photographing at least a part of the body of the player.

Further, the display unit 142 may include a plurality of monitors 142-1, 142-2, and 142-3. According to another embodiment of the present disclosure, a first monitor may output a dart game play image, a second monitor may output a dart game image correlated with the dart game play image outputted to the first monitor, or each monitor may output the dart game image for each team. The respective monitors may output different lesson images. The plurality of monitors 142-1, 142-2, and 142-3 included in the display unit 142 will be described below.

The display unit 142 may include at least one of a liquid crystal display (LCD), a thin film transistor-liquid crystal display (TFT LCD), an organic light-emitting diode (OLED), a flexible display, and a 3D display.

Some displays among them may be configured as a transparent or light transmissive type to view the outside through the displays. This may be called a transparent display and a representative example of the transparent display includes a transparent OLED (TOLED), and the like.

According to an implementation form of the dart game apparatus 100, the display unit 142 may include a plurality of monitors. For example, in the dart game apparatus 100, the plurality of monitors may be separated from each other or integrally disposed on one surface, and further, disposed on different surfaces, respectively. For example, the display unit 142 may include both the monitor 142-2 disposed at an upper end of the dart target 110 and the monitor 142-1 disposed at a lower end of the dart target 110, or may include one monitor thereof. However, the location where the aforementioned monitor is disposed is an example, and the monitor may be disposed at various locations for a demand due to a design or a visual effect.

The touch sensor may be configured to convert a change in pressure applied to a specific portion of the display unit 142 or capacitance generated at the specific portion of the display unit 142 into an electrical input signal. The touch sensor may be configured to detect touch pressure as well as a touched position and area.

When there is a touch input for the touch sensor, a signal(s) corresponding to the touch input is(are) sent to a touch controller. The touch controller processes the signal(s) and thereafter, transmits data corresponding thereto to the controller 190. As a result, the controller 190 may know which region of the display unit 142 is touched.

The illumination unit 143 outputs a signal for notifying occurrence of an event of the dart game apparatus 100. Examples of the event which occurs from the dart game apparatus 100 include identification of the dart game player, direct hit of the dart, a change of the dart game player, game over, and the like. The illumination unit 143 may include a light emission diode (LED) and notify the occurrence of the event to the user by flickering the LED.

The LEDs are disposed on the bottom of the dart target 110 to be flickered according to a flickering pattern which is pre-stored according to the occurrence of the event. For example, one or more LEDs may be allocated to respective parts of the dart target 110. The allocated LEDs are disposed on the bottom of the dart target 110 and may be disposed in a direction orienting the outside of the dart game apparatus 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration.

The camera unit 150 includes multiple cameras 151 to 153, and as a result, an image frame processed by the cameras 151 to 153 may be stored in the memory 180 or transmitted to the outside through the communication unit 160. Two or more camera units 150 may be provided according to a use environment.

At least some cameras of the camera unit 150 may be disposed to photograph an image frame including the dart target 110 and other cameras may be disposed to photograph an image frame directly related with a game rule in the dart game play. For example, the camera may be disposed to photograph a throw-line on which the dart is thrown in order to photograph the image frame directly related with the dart game rule. The multiple cameras 151 to 153 included in the camera unit 150 may be disposed to photograph at least some image frames to overlap with each other. At least some cameras of the camera unit 150 may be disposed to photograph at least a part of the dart game player for the lesson for the throwing operation of the dart game player. The camera may photograph an upper body or a whole body of the dart game player. The camera of the camera unit 150 may photograph an image required for the lesson for the throwing operation of the player.

When the camera unit 150 includes one camera, the camera may be a panoramic camera disposed to photograph both at least a part of the dart target 110 and the image frame (e.g., the throw-line in the dart game) directly related with the game rule.

The communication unit 160 may include one or more modules that enable wireless communication between the dart game apparatus 100 and a wired/wireless communication system or between the dart game apparatus 100 and a network on which the dart game apparatus 100 is positioned.

The communication unit 160 may include a wired/wireless Internet module for network access. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, a digital subscriber line (XDSL), fibers to the home (FTTH), power line communication (PLC), or the like may be used.

Further, the communication unit 160 includes a short-range communication unit to transmit and receive data to and from an electronic apparatus positioned in a comparatively short range from the dart game apparatus 100 and including the short-range communication unit. As short-range communication technology, Bluetooth, radio frequency identification (RFID), infrared data association (IrDA), ultra wideband (UWB), ZigBee, or the like may be used.

The communication unit 160 may sense a connection state of the network and a transceiving speed of the network.

Data received through the communication unit 160 may be output through the output unit 140, stored through the memory 180, or transmitted to other electronic apparatuses positioned in a short range through the short-range communication unit.

According to an embodiment of the present disclosure, the dart game apparatus 100 may provide a dart game match-up mode including at least one player playing at a remote place via the communication unit 160.

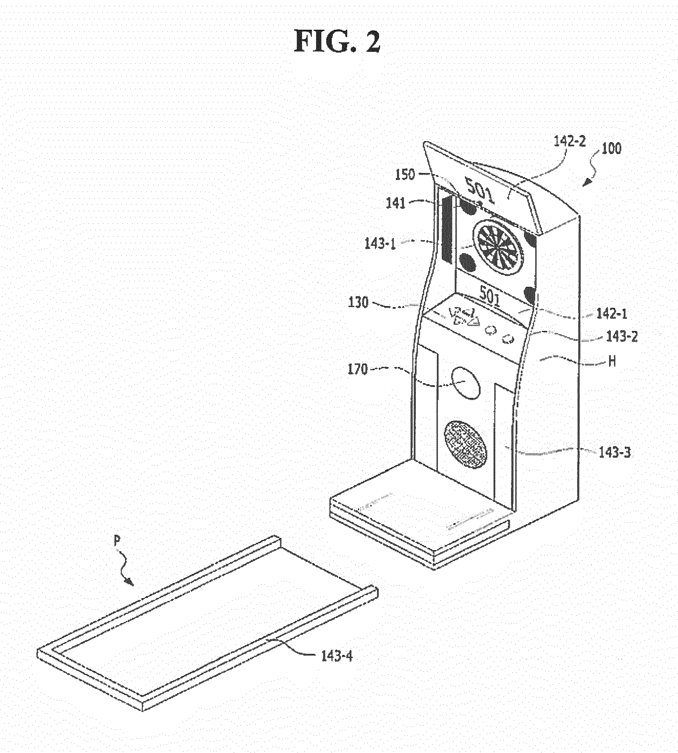

The user recognition unit 170 recognizes unique information of a long-range user by using a radio wave through the radio frequency identification (RFID) technology which is a kind of short range communication technology. For example, the user may possess a card, a mobile terminal, or unique dart game equipment, for example, his/her own personal dart equipment, which includes an RFID module. Information (e.g., a personal ID, an identification code, and the like of the user registered in the database server (DB) (see FIG. 2)) for identifying the user may be recorded in the RFID module possessed by the user. The dart game apparatus 100 may identify the RFID module possessed by the user to identify a dart game player which plays the game by using the dart game apparatus 100 and update a database for the identified dart game player or accumulate new data.

The user recognition unit 170 may include various technologies (e.g., the short-range communication technology such as the Bluetooth, and the like) that may transmit and receive unique information of the user by a contact/non-contact method in addition to the RFID technology. Further, the user recognition unit 170 may include a biodata identification module that identifies biodata (speech, a fingerprint, and a face) of the user by interworking with the microphone of the user input unit 130, the touch pad, the camera unit 150, and the like.

The memory 180 may store a program for a motion of the controller 190 therein and temporarily store input/output data (e.g., a phone book, a message, a still image, a moving picture, or the like) therein. The memory 180 may store data regarding various patterns of vibrations and sounds output in the touch input on the touch screen.

The memory 180 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet.

In addition, according to an embodiment of the present disclosure, the memory 180 may store information related to the virtual player. Such information may include rating information (ranking and level) of the virtual player, dart game play image information, propensity information of the virtual player, profile information of the virtual player, accuracy rate information of the virtual player, and the like. The above description is only an example and information required for implementing the virtual player may be stored in the memory 180. The propensity information of the virtual player may mean a play mode of the player which plays a dart game such as "lack of persistence" and "weakness to tension". The "lack of persistence" may mean a case where the accuracy rate of the virtual player is increased in the early part of the game and then decreased in the later part of the game. The "weakness to tension" may mean a case where the accuracy rate of the virtual player is decreased at the moment of tension such as a reversal chance. The propensity information of the aforementioned virtual player is just an example and may include a game play mode which may be shown by a dart game player. Further, the memory 180 may download and store information related to the virtual player stored in the server. Moreover, the dart game apparatus 100 may read the information related to the virtual player stored in the server.

In addition, according to an embodiment of the present disclosure, the memory 180 may store information related to the lesson for the dart throwing operation. Such information may include the lesson image of the virtual player, a game description image of the virtual player, the lesson image of the virtual player related with whether the player achieves a goal, and the like.

The controller 190 generally controls all motions of the dart game apparatus 100. For example, in the case of the dart game, the score sensed through the sensing unit 120 is collected for a game participant, the collected score is transmitted to and received from another dart game apparatus connected through the network, and a game winning or losing record, the score, and the like according to the collected result are recorded.

According to an embodiment of the present disclosure, the controller 190 may select the virtual player. The virtual player may be randomly selected or selected according to the input of the user and is not limited thereto and may be selected by various methods. In this case, a plurality of virtual players may be provided.

According to an embodiment of the present disclosure, the controller 190 may provide a dart game match-up mode which may be performed by a plurality of players including at least one virtual player and at least one real player.

The controller 190 may provide a dart game match-up mode in which a team including the virtual player and the real player together may play the game with at least one other team. In this case, one or more virtual players and one or more real players may be provided.

For example, the controller 190 may provide a dart game match-up mode in which a first real player and a first virtual player become the same team to play the game and provide a dart game match-up mode in which the first real player, the first virtual player, and a second virtual player become the same team to play the game.

Further, the controller 190 may provide a dart game match-up mode in which the first real player and the first virtual player become the same team and a second real player and the second virtual player become the same team to play the game. In this case, the controller 190 may adjust a balance of a dart game ability among the respective teams by adjusting the dart game abilities of the virtual players.

Further, the controller 190 may provide a dart game match-up mode in which a team including only the virtual players and a team including only the real players, or a combination thereof may play the game with at least one other team. In this case, one or more virtual players and one or more real players may be provided.

For example, the controller 190 may provide a dart game match-up mode in which the first real player and the second real player become a first team and the first virtual player and the second virtual player become a second team to play the game.

According to an embodiment of the present disclosure, the controller 190 may allow a predetermined first image to be displayed in the display unit 142 according to the hit location of the dart pin thrown by at least one real player, which is sensed by the sensing unit 120.

The controller 190 may set a condition for displaying the first image in advance. For example, the controller 190 may set the first image to be displayed when the hit location is a double bull 410, a single bull 420, a triple ring 440, and a double ring 460. The controller 190 may set the first image to be displayed by receiving the input of the user and may set the first image to be displayed according to data received from an external device and is not limited thereto.

The controller 190 may acquire information on the hit location of the dart pin thrown by the real player. Herein, one or more real players may be provided.

For example, the sensing unit 120 may sense whether the hit location of the dart pin thrown by the real player is the double bull 410, the single bull 420, a small single 430, the triple ring 440, a large single 450, or the double ring 460 among the regions of the dart target 110 and the controller 190 may acquire the information on the hit location from the sensing unit 120.

The controller 190 may allow the first image to be displayed in the display unit 142 according to the hit location of the dart pin thrown by the real player.

For example, when the hit location is the triple ring 440 and when the hit location is the double bull 410, the first image is set to be displayed in advance and when the hit location of the dart pin thrown by the real player is the triple ring 440 or the double bull 410, the controller 190 may allow the first image to be displayed in the display unit 142.

The first image may be an image associated with the virtual player. For example, the first image may be associated with the virtual player that forms the same team as the real player among the virtual players participating in the dart game. Further, the first image may be associated with the virtual player that forms a different team from the real player among the virtual players participating in the dart game. In addition, the first image may be associated with at least one of one or more virtual players which do not participate in the dart game, but are stored in the dart game apparatus 100.

The first image may include an effect image for the hit location of the throw dart pin. For example, the first image may include an image in which the virtual player appears and shouts triple, an image in which the virtual player appears and shouts double, and an image in which the virtual player appears and shouts double bull, but is not limited thereto.

A time at which the first image is displayed may be set in advance. For example, the first image may be displayed in the display unit 142 at the same time as the dart pin thrown by the real player arrives at the dart target 110 and the first image may be displayed within a predetermined time after the dart pin arrives at the dart target 110, but is not limited thereto.

A display period of the first image may be set in advance. For example, the display period of the first image may be set between 0.8 seconds and 1.2 seconds in advance so as to prevent a large influence from being exerted on a progress time of the dart game, but is not limited thereto.

The first image may be displayed in a part of or the entire display unit 142. For example, the first image may be displayed in a part of a lower left region in the display unit 142. Further, the first image may be displayed in a part of a lower right region in the display unit 142 and may be displayed in the entire display unit 142, but is not limited thereto.

When the display unit 142 is constituted by the plurality of monitors, the first image may be displayed in each of the plurality of monitors. For example, the first image may be displayed at the same location of each of the plurality of monitors and may be displayed at different locations in the plurality of respective monitors and is not limited thereto.

According to an embodiment of the present disclosure, the controller 190 may allow the display unit 142 to display the second image depending on the hit locations of a plurality of dart pins thrown in one round from one of one or more real players.

The controller 190 may set a case where the second image is displayed in advance. For example, the controller 190 may calculate the sum of the scores of the plurality of dart pins thrown in one round and set the second image to be displayed when the calculated value is larger than a predetermined value. Further, the controller 190 may set the second image to be displayed when the hit locations of one or more dart pins among the plurality of dart pins thrown in one round correspond to specific regions. The controller 190 is not limited thereto and may set the second image to be displayed in the display unit 142 according to the hit locations of the plurality of dart pins thrown in one round in various cases.

The controller 190 may acquire from the sensing unit 120 information on the hit locations of the plurality of dart pins thrown by the real player in one round. For example, when the real player throws the dart pin three times in one round, information on the hit locations of the respective dart pins three times may be obtained from the sensing unit 120.

The controller 190 may allow the second image to be displayed according to the hit locations of the plurality of dart pins. For example, the controller 190 may calculate the sum of the scores which match the hit locations of the plurality of dart pins, respectively, and allow the display unit 142 to display the second image when the calculated value is equal to or larger than a predetermined value. As another example, the controller 190 may allow the display unit 142 to display the second image when regions including the hit locations of two dart pins among the hit locations of three dart pins thrown in one round are the same as each other.

The second image may be the image associated with the virtual player. For example, the second image may be associated with the virtual player that forms the same team as the real player among the virtual players participating in the dart game. Further, the second image may be associated with the virtual player that forms a different team from the real player among the virtual players participating in the dart game. In addition, the second image may be associated with at least one of one or more virtual players which do not participate in the dart game, but are stored in the dart game apparatus 100.

The second image may include an AWARD image for the hit locations of the dart pins thrown in one round. For example, the second image may include an image in which the virtual player appears and shouts nice, which indicates a meaning of praising the real player, an image in which the virtual player appears and shouts good, which indicates a meaning of praising the real player, an image in which the virtual player appears and shouts cheer, which indicates a meaning of praising the real player, an image in which the virtual player appears and shouts perfect, which indicates that the real player is perfect, and the like, but is not limited thereto.

A time at which the second image is displayed may be set in advance. For example, the second image may be displayed at the time when one round ends, at the time when a predetermined time elapses after the end of one round, or at the time when the input of the user is received after one round ends, but is not limited thereto.

The display period of the second image may be set in advance. For example, the display period of the second image may be set between 0.8 seconds and 1.2 seconds in advance so as to prevent the large influence from being exerted on the progress time of the dart game, but is not limited thereto.

The second image may be displayed in a part or the entirety of the display unit 142. For example, the second image may be displayed in a part of the lower left region in the display unit 142. Further, the second image may be displayed in a part of the lower right region in the display unit 142 and may be displayed in the entirety of the display unit 142, but is not limited thereto.

When the display unit 142 is constituted by the plurality of monitors, the second image may be displayed in each of the plurality of monitors. For example, the second image may be displayed at the same location of each of the plurality of monitors and may be displayed at different locations in the plurality of respective monitors and is not limited thereto.

According to an embodiment of the present disclosure, the controller 190 may predict the round of the real player and allow a third image to be displayed in the display unit 142 before the round of the real player starts according to the identification information.

The controller 190 may predict the round of the real player. For example, when a first player and a second player perform a dart match-up game and the round of the second player ends, the controller 190 may predict that the round of the first player will start.

The controller 190 may allow the third image to be displayed in the display unit 142 according to the identification information of the real player before the round of the real player starts. For example, when the first player and the second player perform the dart match-up game and the round of the second player ends, the controller 190 may allow the third image to be displayed in the display unit 142 before the round of the first player starts according to the identification information of the first player.

The identification information means various information related to the real player. For example, the identification information may include a score obtained by the real player before the start of a current round, points per dart (PPD) of the real player, marks per round (MPR) of the real player, a member grade of the real player, a record of the real player, and the like, but is not limited thereto and may include various information related to the real player.

The third image may be the image associated with the virtual player. For example, the third image may be associated with the virtual player that forms the same team as the real player among the virtual players participating in the dart game. Further, the third image may be associated with the virtual player that forms a different team from the real player among the virtual players participating in the dart game. In addition, the third image may be associated with at least one of one or more virtual players which do not participate in the dart game, but are stored in the dart game apparatus 100.

The third image may include a cheer image for the real player. For example, the third image may include an image in which the virtual player appears and shouts fighting, an image in which the virtual player appears and gives encouragement, an image in which the virtual player appears and sings a fight song, and the like, but is not limited thereto.

A time at which the third image is displayed may be set in advance. For example, the third image may be displayed at the time when a predetermined time elapses after one round ends or at the time when the input of the user is received after one round ends, but is not limited thereto.

The display period of the third image may be set in advance. For example, the display period of the third image may be set between 0.8 seconds and 1.2 seconds in advance so as to prevent the large influence from being exerted on the progress time of the dart game, but is not limited thereto.

The third image may be displayed in a part or the entirety of the display unit 142. For example, the third image may be displayed in a part of a lower left side in the display unit 142. Further, the third image may be displayed in a part of a lower right side in the display unit 142 and may be displayed in the entirety of the display unit 142, but is not limited thereto.

When the display unit 142 is constituted by the plurality of monitors, the third image may be displayed in each of the plurality of monitors. For example, the third image may be displayed at the same location of each of the plurality of monitors and may be displayed at different locations in the plurality of respective monitors and is not limited thereto.

According to an embodiment of the present disclosure, the controller 190 may sense the round of the virtual player and allow the display unit 142 to display an image related to dart pin throwing of the virtual player while the sensed round of the virtual player is played.

The controller 190 may sense the round of the virtual player. For example, when the first real player and the first virtual player play the dart match-up mode and the round of the first real player ends, the controller 190 may sense that the current round is the round of the first virtual player.

The controller 190 may allow the display unit 142 to display a fourth image related to the dart pin throwing of the virtual player while the round of the virtual player is played.

The fourth image may include an operation image in which the virtual player throws the dart pin, an image in which the dart pin moves toward the dart target, an image in which the thrown dart pin arrives at the dart target, or a combination thereof. For example, when the fourth image is divided into two regions, a first region may include the operation image in which the virtual player throws the dart pin and a second region may include the image where the thrown dart pin arrives at the dart target. In addition, the fourth image is divided into three regions, the first region on a right side may include the operation image in which the virtual player throws the dart pin, the second region at the center may include the image in which the thrown dart pin moves toward the dart target, and a third region on a left side may include the image where the thrown dart pin arrives at the dart target.

When the fourth image is divided into a plurality of regions, the respective regions may be displayed simultaneously or sequentially.

For example, when the fourth image is divided into three regions, the operation image in which the virtual player throws the dart pin in the first region, the image in which the thrown dart pin moves toward the dart target in the second region, and the image where the thrown dart pin arrives at the dart target in the third region may be simultaneously displayed. Further, the operation image in which the virtual player throws the dart pin in the first region may be first displayed and thereafter, the image in which the thrown dart pin moves toward the dart target in the second region may be displayed. Then, the image where the thrown dart pin arrives at the dart target in the third region may be displayed.

The fourth image may include various effects. For example, the dart pin throwing image included in the fourth image may include a slow effect that the dart pin moves slowly toward the dart target, a twinkling effect of the moving dart pin, an effect that the dart pin moves while being closed up, and the like, but is not limited thereto and the dart pin throwing image may include various effects.

According to an embodiment of the present disclosure, the controller 190 may allow a predetermined fifth image to be displayed to the display unit 142 according to the hit location of the dart pin thrown by at least one virtual player.

The controller 190 may acquire information on the hit location of the dart pin thrown by the virtual player. Herein, one or more virtual players may be provided.

For example, the controller 190 may sense whether the hit location of the dart pin thrown by the virtual player is the double bull 410, the single bull 420, the small single 430, the triple ring 440, the large single 450, or the double ring 460 among the regions of the dart target 110.

The controller 190 may allow the fifth image to be displayed in the display unit 142 according to the hit location of the dart pin thrown by the virtual player.

For example, when the hit location is the triple ring 440 and when the hit location is the double bull 410, the fifth image is set to be displayed in advance and when the hit location of the dart pin thrown by the virtual player is the triple ring 440 or the double bull 410, the controller 190 may allow the fifth image to be displayed in the display unit 142.

The fifth image may be the image associated with the virtual player. For example, the fifth image may be associated with the virtual player that forms the same team as the virtual player who throws the dart pin among the virtual players participating in the dart game. Further, the fifth image may be associated with the virtual player that forms a different team from the player who throws the dart pin among the virtual players participating in the dart game. In addition, the fifth image may be associated with at least one of one or more virtual players which do not participate in the dart game, but are stored in the dart game apparatus 100.

The fifth image may include the effect image for the hit location of the thrown dart pin. For example, the fifth image may include the image in which the virtual player appears and shouts triple, the image in which the virtual player appears and shouts double, and the image in which the virtual player appears and shouts double bull, but is not limited thereto.

A time at which the fifth image is displayed may be set in advance. For example, the fifth image may be displayed in the display unit 142 at the same time as the dart pin thrown by the virtual player arrives at the dart target 110 and the fifth image may be displayed within a predetermined time after the dart pin arrives at the dart target 110, but is not limited thereto.

The display period of the fifth image may be set in advance. For example, the display period of the fifth image may be set between 0.8 seconds and 1.2 seconds in advance so as to prevent the large influence from being exerted on the progress time of the dart game, but is not limited thereto.

The fifth image may be displayed in a part or the entirety of the display unit 142. For example, the fifth image may be displayed in a part of the lower left side in the display unit 142. Further, the fifth image may be displayed in a part of the lower right side in the display unit 142 and may be displayed in the entirety of the display unit 142, but is not limited thereto.

When the display unit 142 is constituted by the plurality of monitors, the fifth image may be displayed in each of the plurality of monitors. For example, the fifth image may be displayed at the same location of each of the plurality of monitors and may be displayed at different locations in the plurality of respective monitors and is not limited thereto.

According to an embodiment of the present disclosure, the controller 190 may allow the display unit 142 to display a sixth image depending on the hit locations of a plurality of dart pins thrown in one round from one of one or more virtual players.

The controller 190 may acquire information on the hit locations of the plurality of dart pins thrown by the virtual player in one round. For example, when the virtual player throws the dart pin three times in one round, the controller 190 may acquire information on the hit locations of respective dart pins three times.

The controller 190 may allow the display unit 142 to display the sixth image according to the hit locations of the plurality of dart pins. For example, the controller 190 may calculate the sum of the scores which match the hit locations of the plurality of dart pins, respectively, and allow the display unit 142 to display the sixth image when the calculated value is equal to or larger than a predetermined value. As another example, the controller 190 may allow the display unit 142 to display the sixth image when regions including the hit locations of two dart pins among the hit locations of three dart pins thrown in one round are the same as each other.

The sixth image may be the image associated with the virtual player. For example, the sixth image may be associated with the virtual player that forms the same team as the virtual player who throws the dart among the virtual players participating in the dart game. For example, the sixth image may be associated with the virtual player that forms a different team from the virtual player who throws the dart among the virtual players participating in the dart game. In addition, the sixth image may be associated with at least one of one or more virtual players which do not participate in the dart game, but are stored in the dart game apparatus 100 or associated with the virtual player who throws the dart.

The sixth image may include the AWARD image for the hit locations of the dart pins thrown in one round. For example, the sixth image may include an image in which the virtual player appears and shouts nice, an image in which the virtual player appears and shouts good, and an image in which the virtual player appears and shouts cheer, an image in which the virtual player appears and shouts perfect, and the like, but is not limited thereto.

A time at which the sixth image is displayed may be set in advance. For example, the sixth image may be displayed at the time when one round ends or the time when a predetermined time elapses after the end of one round, but is not limited thereto.

The display period of the sixth image may be set in advance. For example, the display period of the sixth image may be set between 0.8 seconds and 1.2 seconds in advance so as to prevent the large influence from being exerted on the progress time of the dart game, but is not limited thereto.

The sixth image may be displayed in a part or the entirety of the display unit 142. For example, the sixth image may be displayed in a part of the lower left side in the display unit 142. Further, the sixth image may be displayed in a part of the lower right side in the display unit 142 and may be displayed in the entire display unit 142, but is not limited thereto.

When the display unit 142 is constituted by the plurality of monitors, the sixth image may be displayed in each of the plurality of monitors. For example, the sixth image may be displayed at the same location of each of the plurality of monitors and may be displayed at different locations in the plurality of respective monitors and is not limited thereto.

The controller 190 may provide the lesson mode for the throwing operation of the dart game player and generate the lesson image for the throwing operation of the dart game player. The controller 190 may provide a dart game match-up mode that may be performed by a plurality of players including at least one virtual player and at least one real player and the lesson for the throwing operation may be performed with respect to the throwing operation of at least one real player. The controller 190 may load and generate the lesson image stored in the memory 180 or the server. Further, the controller 190 may determine which lesson image the display 142 outputs.

The lesson image may include a first lesson image including one or more predetermined lines for the lesson for the throwing operation in the image of the dart game player photographed by the camera unit 150. The one or more predetermined lines may include at least one of a head circle matched with a head of the dart game player, an arm line matched with an arm of the dart game player, and an elbow line matched with an elbow of the dart game player. The one or more lines may be superimposed on and displayed on the photographed image of the camera unit 150 that photographs the dart game player on the display 142. The one or more lines may induce the dart game player to match each part of the body of the player with the one or more lines. Further, the one or more lines may be determined by allowing the player to control the line through the user input unit 130. In addition, the controller 190 analyzes the photographed image of the camera unit 150 to extract each part of the body of the dart game player and determine one or more lines that match each part of the body. The one or more lines described above are just exemplary and may include a predetermined line that matches a body part that needs to be constantly maintained during the throwing operation of the dart pin in the body.

The controller 190 may display the dart throwing operation of the player on the display 142 as the first lesson image so that the player checks whether the elbow, head, and the like of the player are not moved during the throwing operation. In addition, the controller 190 may allow the display 142 to display an image in which at least one line is added to a replay image of the throwing operation of the player. The player may personally check a problem of the dart throwing operation thereof while watching the replay image of the throwing operation which is underlined.

The controller 190 may sense that each part of the body of the player configuring the throwing operation deviates from one or more lines and determine to output a feedback for the throwing operation. The feedback may include at least one of a second lesson image, the replay image, and a notification. For example, when the player throws a dart pin, in the case where at least one of the respective parts (e.g., the head, the arm, and the elbow) of the body configuring the throwing operation deviates from a predetermined line, the controller 190 may determine to output the second lesson image including the lesson image of the virtual player. When the player throws the dart pin, in the case where the head is largely moved out of a head circle, the second lesson image may be a lesson image that orders the head to be fixed. When the player throws the dart pin and the arm of the player deviates from the arm line, the controller 190 may cause the display 142 to output the replay image indicating that the arm deviates from the arm line in the throwing image of the player. In addition, when the player's head is largely moved while the dart pin is being reciprocated back and forth to measure throwing force in the process of aiming to throw the dart pin by the player, the controller 190 allows the head circle displayed in the display 142 to be brightened or outputs a sound associated therewith to notify to the player that the throwing posture is lost.

The controller 190 may determine whether the dart game player achieves a predetermined target based on the hit location of the dart pin sensed by the sensing unit 120 and generate at least one of a third lesson image and a fourth lesson image for the throwing operation of the dart game player based on the determination result. When the player achieves the predetermined target, the controller 190 may determine to output the third lesson image. When the player is not capable of achieving the predetermined target, the controller 190 may determine to output the fourth lesson image. For example, a player whose arm is moved to the left or right when the dart pin is thrown and the dart pin deviates from the target point to the left or right may accurately hit three dart pins on the predetermined target without deviating a certain distance or more from side to side from a target point. The controller 190 may generate the lesson image so that the arm is not moved to the left and right by the player and set the predetermined target for the player of the corresponding player. When the player moves the arm back and forth only at the time of throwing the dart pin so that the dart pin does not deviate from the target point to the left and right, the controller 190 may determine, based on a sensing result of the sensing unit 120, to output the third lesson image to praise the player. When the dart pin thrown by the player still hits a point which deviates from side to side as the sensing result of the sensing unit 120, the controller 190 may determine to output the fourth lesson image to order the player to recall lesson contents.

The controller 190 may identify the level of the user authenticated by the user recognition unit 170 and determine one or more virtual players which match the identified level. In addition, the controller 190 determine whether the user is a player having a predetermined qualification and when the user is the player having the predetermined qualification, the controller 190 may generate the lesson image of the virtual player for the throwing operation of the player. For example, the player having the predetermined qualification may include a paid member. The lesson mode may be provided to the paid member. The controller 190 may determine whether the player is the paid member who is qualified to use the lesson mode and may provide the lesson mode when the member is the paid member. The predetermined qualification mentioned above is only an example and the controller 190 may determine whether an authenticated user for the predetermined qualification is the user having the predetermined qualification.

The controller 190 may perform pattern recognition processing to recognize a motion input, a write input, and the like performed on the touch screen or camera as a text or an image. Further, the controller may perform speech recognition by using a speech-to-text (STT) function to recognize the speech input through the microphone as the text.

Various embodiments described herein may be implemented in a computer-readable recording medium or a recording medium readable by a device similar to the computer by using, for example, software, hardware, or a combination thereof.

According to hardware implementation, the embodiment described herein may be implemented by using at least one of the application specific integrated circuits (ASICs), the digital signal processors (DSPs), the digital signal processing devices (DSPDs), the programmable logic devices (PLDs), the field programmable gate arrays (FPGAs), the processors, the controllers, the micro-controllers, the microprocessors, and the electric units for performing other functions. In some cases, the embodiments described in the specification may be implemented by the controller 190 itself.

According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the controller 190.

FIG. 2 is a perspective view of the dart game apparatus according to an embodiment of the present disclosure.

As illustrated in FIG. 2, the dart game apparatus 100 according to the embodiment of the present disclosure may be formed by mounting the components illustrated in FIG. 1 in a housing H. A dart target 110, a display unit 142, an illumination unit 143, a sound output unit 141, a camera unit 150, and a user recognition unit 170 may be disposed on the front surface of the dart game apparatus 100.

The dart target 110 may be disposed so that a dead center is positioned at a position (for example, 5 feet 8 inches in a vertical direction from the ground) which conforms with a rule of the dart game. The illumination units 143-1, 143-2, and 143-3 may be disposed at various parts of the dart game apparatus 100 to transfer a visual effect to the player of the dart game apparatus 100.

For example, the illumination unit 143-1 is disposed at the side of the dart target 110 and may serve to irradiate an illumination to the dart target 110. The illumination unit 143-1 may also output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143-1, the illumination unit 143-2 may output a predetermined illumination effect according to an event of the dart game and output illumination effects having various colors.

The illumination unit 143-3 may be disposed on the side of the user recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Selectively, the dart game apparatus 100 may include a dart plate P which may be selectively connected with the dart game apparatus 100 and is extended in a horizontal direction. The dart plate P may further include an illumination unit 143-4. The dart plate P may be integrally coupled with or selectively attached to or detached from the dart game apparatus 100.

When the dart plate P is integrally coupled with or selectively attached to the dart game apparatus 100, the dart plate P may be electrically connected with the dart game apparatus 100. The illumination unit 143-4 of the dart game apparatus 100 may be disposed along the outside of the dart plate P as illustrated in FIG. 2. One end of the dart plate P may be extended to a place where a throw-line is to be positioned according to a distance of the throw-line from the dart target according to a rule of the game. The illumination unit 143-4 may be disposed at a position corresponding to the throw-line.

Although not illustrated in FIG. 2, an illumination unit (not illustrated) is disposed at the bottom of the dart target 110 to irradiate an illumination effect in a user direction. The illumination unit (not illustrated) may include a combination of different illumination elements allocated according to each segment configuring the dart target.

The housing H of the dart game apparatus 100 may include the display unit 142 disposed in the user direction. The display unit 142 may display information required for the user according to the progress of the dart game (for example, a collected score, information on a player which is playing the game, a score required for clearing the corresponding game, information of an opponent player which does not play the game, a dart game image, and the like). The display unit 142 may display a visual effect according to an event depending on the progress of the dart game. For example, when the user continuously hits a bullseye at the dead center of the dart target 110 with three dart throw opportunities, the display unit 142 may display a pre-stored motion picture corresponding to the corresponding event. The motion picture may be stored in the memory 180 of the dart game apparatus 100 or received from a server through the communication unit 160.

The display unit 142 may provide the user with visual and audible effects according to occurrence of the event by interlocking with the illumination units 143-1, 143-2, 143-3, and 143-4 and the sound output unit 140. In other words, when a predetermined event occurs, the display 142, the illumination units 143-1, 143-2, 143-3, and 143-4, and the sound output unit 140 may output an illumination effect, a display effect, and a sound effect with respect to the corresponding event together.

In FIG. 2, it is illustrated that the display units 142 are disposed at the lower end and the upper end of the dart target 110, but the number and disposed locations of display units 142 may be variously modified. In an embodiment of the present of disclosure, the display unit 142 may include a plurality of monitors 142-1, 142-2, and 142-3.

The user input unit 130 may be configured in a key pad button form as illustrated in FIG. 2. However, as described above, the user input unit 130 may be configured by various types including a touch screen. The user operates a key button of the user input unit 130 to select a mode of a game to be played by the user, a virtual player which the user intends to play the game as a team, and the like.

The sound output unit 141 is also disposed on the front surface of the housing H of the dart game apparatus 100 to output a sound. The number and disposed locations of sound output units 141 may also be variously modified.

The camera unit 150 may be mounted on the top of the housing H of the dart game apparatus 100 as illustrated in FIG. 2. The camera unit 150 may include one or more cameras 151, etc., which may photograph the dart target 110 and the throw line. The image photographed through the camera unit 150 may be transferred to the memory 180. In some embodiments, only some of the motion pictures photographed by the camera unit 150 may be finally stored in the memory 180 or transferred to a server (not illustrated) through the communication unit 160.

The user recognition unit 170 may be disposed on the front surface of the housing H of the dart game apparatus 100 and include a short range communication unit as illustrated in FIG. 2. The user touches a card for recognizing the user near the user recognition unit 170 to complete the user authentication. According to an embodiment of the present disclosure, the controller 190 or the dart game server may select the virtual player at least partially based on the information of the authenticated player. For example, the controller 190 may select a virtual player having the same playing ability as the player based on ranking information of the authenticated player. In addition, the controller 190 may select the virtual player capable of canceling a difference in ability between actual players for each team based on the information of the players for each team.

The contents illustrated in FIG. 2 and the description of the exterior of the aforementioned dart game apparatus 100 are just an example proposed for description, and the dart game apparatus 100 according to the present disclosure is not limited to the exterior illustrated in FIG. 2.

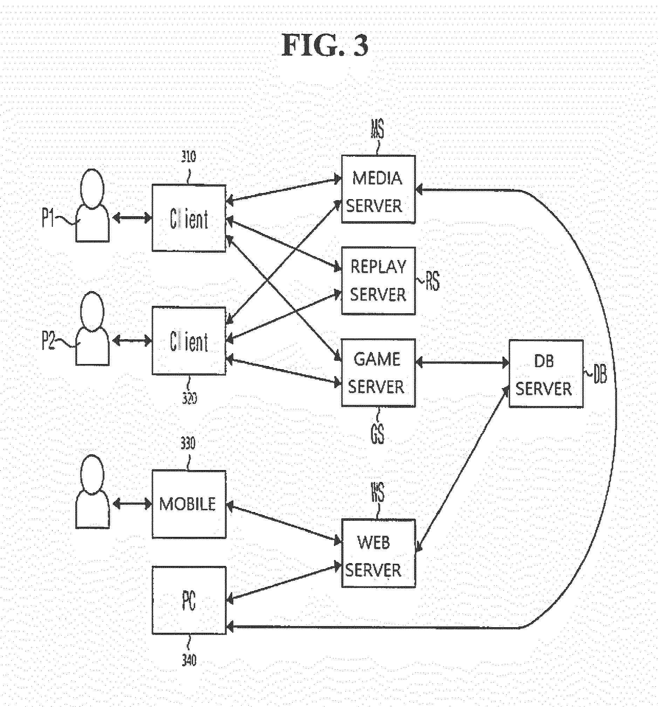

FIG. 3 is a conceptual view of a game network including the dart game apparatus according to an embodiment of the present disclosure.

As illustrated in FIG. 3, the dart game apparatus 100 used by a first game player P1 may be connected with one or more servers (a media server MS, a relay server RS, and a dart game server GS) through a network.

A plurality of dart game players may enjoy the dart game in the same space at the same time using the same first dart game apparatus 100. However, when a second dart game player P2 positioned at a remote distance from the first dart game player P1 intends to participate in the dart game, the second dart game player P2 may perform the dart game by transmitting/receiving information to/from the first dart game apparatus 100 in connection with one or more servers (the media server MS, the relay server RS, and the dart game server GS) through the network by a second dart game apparatus 100. The first dart game apparatus 100 and the second dart game apparatus may transmit and receive information via one or more servers (the media server MS, the relay server RS, and the dart game server GS) or directly transmit/receive the information between the dart game apparatuses.

According to an embodiment of the present disclosure, the dart game apparatus may provide the dart game match-up mode including at least one player playing at a remote place via a communication unit.

The dart game may be performed in such a manner that both dart game players P1 and P2 play the dart game at different places at the same time or the dart game may be performed in such a manner that both dart game players P1 and P2 play the dart game at different places at different time and win or lose or a ranking is determined by storing play contents in a DB server DB.

In addition, according to an embodiment of the present disclosure, information related to the virtual player may be stored in the DB server. Such information may include rating information (ranking and level) of the virtual player, dart game play image information, propensity information of the virtual player, profile information of the virtual player, accuracy rate information of the virtual player, and the like. The above description is only an example and information required for implementing the virtual player may be stored in the DB server. The propensity information of the virtual player may mean a play mode of the player which plays a dart game such as "lack of persistence" and "weakness to tension". The "lack of persistence" may mean a case where the accuracy rate of the virtual player is increased in the early part of the game and then decreased in the later part of the game. The "weakness to tension" may mean a case where the accuracy rate of the virtual player is decreased at the moment of tension such as a reversal chance. The propensity information of the aforementioned virtual player is just an example and may include a game play mode which may be shown by a dart game player.

The media server MS may store dart game play moving pictures of the dart game players P1 and P2, which are stored by using the camera or the microphone stored in the dart game apparatuses. The media server MS may be included in the DB server DB.

The relay server RS connects communication between the plurality of dart game apparatuses. The relay server RS forms a communication network among the plurality of dart game apparatuses positioned at the remote range to form a peer-to-peer (P2P) network.

The game server GS may exchange information (a score acquired by each game player and information for mutual communication among the respective game players) between the dart game apparatuses, transmit an advantage or a warning based on a game rule through the respective dart game apparatuses, or in addition, perform transmission and reception of information required to perform the dart game and controlling the dart game apparatuses. The dart game server GS aggregates winning/losing of the dart game and scores of the respective dart game players to transmit the aggregated winning/losing and scores to the DB server. Further, according to an embodiment of the present disclosure, the dart game server GS may select a virtual player which will constitute a team with the player.

The DB server may store personal information of the respective dart game players, winning/losing and ranking information of the game, score information for each game, or a replay moving picture for each game. The DB server may store the information segmented for each user. The DB server may grant a unique code to each user and manage information for each user by using the unique code. The unique code may be stored in the RFID module (an RFID card or an RFID module stored in the mobile terminal) possessed by each user. As a result, the game apparatuses may identify each game player through the user recognition unit 170 included therein. The DB server may also grant the unique code for identification even to the respective dart game apparatuses and manage the dart game data for each identification code granted to the dart game apparatuses.

The game player may access a web server WS by using a mobile device (including electronic apparatuses such as a mobile terminal, a cellular phone, a PDA, a PDP, and the like, which have a mobile communication function) 330 or a PC 340. The web server WS may be connected with the mobile device 330 by the Internet or Intranet. Further, the web server WS may be connected even with the dart game apparatuses. The web server WS is connected with the DB server DB to provide the dart game data stored in the DB server to the dart game player.

Hereinafter, a representative rule of the dart game and stats of the player associated therewith will be described.

The dart game which may be executed by the dart game apparatus 100 according to the embodiment of the present disclosure may include a 01 game (zero-one game), a cricket game, a count-up game, a match-up mode, and the like.

The 01 game is performed by two teams (alternatively, two players) throwing the dart to the dart target alternately one by one round. One round includes three dart throwing motions. An object of the game is that sum of scores in each round reaches a target score (a score of the unit of 100 or 1000 that generally ends with 01 point, such as 301, 501, 701, 901, 1101, 1501 points, and the like). The target score and a play round may be arbitrarily adjusted according to the number of players that participate in the round.

In the cricket game, the round is performed by throwing three darts in a first round similarly to the 01 game. The standard cricket game may be performed by using only a bull region at the center of the dart target, and 20, 19, 18, 17, 16, and 15 point regions. When the corresponding cricket figures are hit with 3 marks, this is marked as a location of the player and when the corresponding cricket figures are hit with 4 marks or more, scores corresponding to the figures are added up to compete the scores. Herein, the double region and the triple region of the dart target may be calculated with 2 marks and 3 marks, respectively. While the corresponding cricket figure is marked as the location of the player, when a counterpart of the player also marks 3 as the cricket figure, the corresponding cricket figure is regarded to be closed and no score may be added any longer. The object of the game may be set to acquire a high score until a regulation round ends or close all cricket figures and obtain a higher score than that of the counterpart.

The count-up game is a game at which the player wins when acquiring a high score within a predetermined round.

In addition to the aforementioned games, various types of games may be played by the dart game apparatus 100 and the play mode of the dart game apparatus 100 is not limited by the aforementioned game schemes.

The stats of the player may be defined according to the corresponding game rule independently from the winning or losing of the count-up game, the cricket game, and the 01 game.

For example, points per dart (PPD) may be calculated by dividing a total score which the player earns by the number of dart throwing times in the 01 game.

Alternatively, marks per round (MPR) may be calculated by calculating the number of marking times of the player in one round. For example, in the cricket game, when the player performs three dart throwing motions in one round and the darts hit triple 15, single 19, and double bull 20 in the three dart throwing motions, respectively, the MPR becomes (3 + 1 + 2)/1 = 6.00 (MPR).

In a subsequent round, when the player performs three dart throwing motions and the darts hit mark fail, double 18, and bull 20 in the three dart throwing motions, the MPR becomes (3 + 1 + 2 + 0 + 2+ 1)/2 =4.5 (MPR).

The PPD and the MPR as the stats of the player may also be stored as personal data of the player. Alternatively, in the count-up game, an average score of the player per game, a highest score record of the player per game, and the like may be stored as the stats of the player.

The dart game apparatus 100 may play the dart game according to the corresponding mode and transmit a game record per player to the game server GS or the DB server DB. The game server GS or the DB server DB may calculate the PPD and/or MPR for each player according to the corresponding game record and store the calculated PPD and/or MPR as accumulated PPD and/or MPR stats of the player. Further, the game server GS or the DB server DB may individually store the game record of the player. For example, in the 01 game, the count-up game, or the cricket game which the player played in the past, the player may record information on a segment part of a dart which the player hits by each dart throw. The game server GS or DB server DB may store accumulated (average) PPD and/or MPR data and highest PPD and/or MPR data of the player.

The game server GS or the DB server DB may be two physically separated servers. Alternatively, the game server GS and the DB server DB may be one physically integrated server and be distinguished according to roles performed in the server. Further, as described above, one server may serve as both the game server GS and the DB server DB.

The game server GS or the DB server DB may store personal stats of the player and rating (alternatively, grade) may be granted to the player according to the corresponding stats.

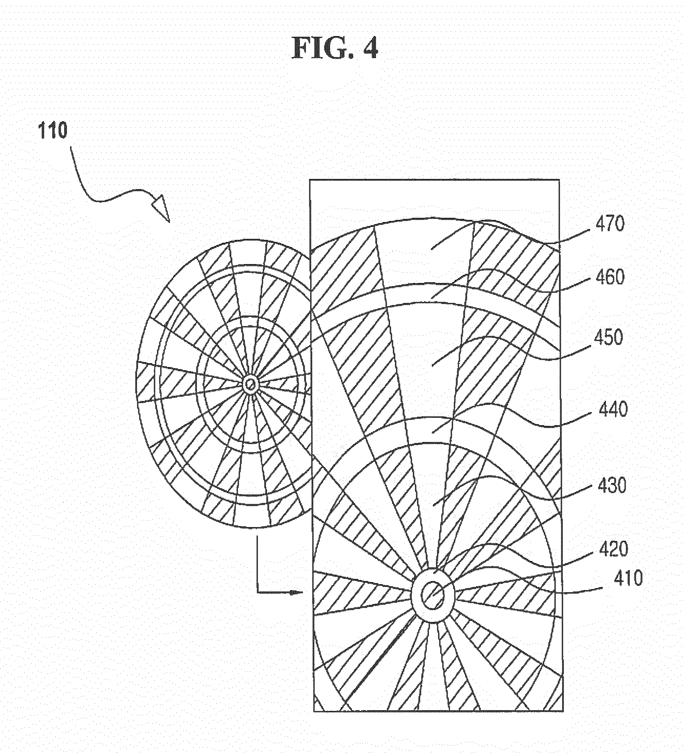

FIG. 4 illustrates the dart target according to the embodiment of the present disclosure.

The dart target 110 may include a plurality of score regions. Referring to FIG. 4, in an aspect of the present disclosure, as the plurality of score regions, the double bull 410 and the single bull 420 having a concentric shape, the small single 430 having the fan shape, which are adjacent thereto, the triple ring 440 adjacent thereto, the large single 450 adjacent thereto, the double ring 460 adjacent thereto, and an outside region 470 at an outermost edge are positioned in accordance with the distance from the center of the dart target.

Hereinafter, the dart game apparatus providing a team dart game match-up mode according to an embodiment of the present disclosure will be described in more detail.

The controller 190 of the dart game apparatus may provide the dart game match-up mode among a plurality of teams each constituted by one or more players. The dart game match-up mode may be a dart game mode in which at least one among the players includes the virtual player. Further, each team may include at least one virtual player.

The virtual player may be a player adjusted through artificial intelligence (AI). An accuracy rate for the dart target of the virtual player may be different according to a level, random, or different according to a situation in which the virtual player is placed and/or a predetermined play tendency of the virtual player.

For example, it is assumed that the virtual player needs to hit 15-point tripling. In this case, the accuracy rate of the virtual player may form a concentric circle based on the 15-point tripling. A probability that a high-level virtual player will hit 15-point tripling may be high and a probability that the high-level virtual player will hit an adjacent score region may be rapidly lowered as being farther from the 15-point tripling. However, a probability that a low-level virtual player will hit 15-point tripling is lower than the probability in the case of the high-level virtual player and an accuracy hit probability may be gradually lowered as being farther from 15-point tripling. Therefore, the probability that the low-level virtual player will accurately hit 15-point tripling may be lower than the probability in the case of the high-level virtual player. In this case, the dart game apparatus 100 may correct a level difference of an actual match-up dart game player to provide a more interesting dart game match-up mode. The above description is just an example and may include various methods that set the accuracy rate according to the level of the virtual player.

Further, for example, the virtual player may randomly hit the score region of the dart target 110. In this case, since the team dart game match-up mode is performed by a fortune, a user may play the game more excitingly.

Further, the virtual player may vary according to a progress situation of the game and/or a predetermined play tendency of the virtual player. For example, the ability of the virtual player may be adjusted according to a current situation of the team including the virtual player, a predetermined tendency of the virtual player, an ability of the real player included in the same team as the virtual player, abilities of players included in a team different from the virtual player, abilities of one or more virtual players included in the team different from the virtual player, or a combination thereof.

In detail, it is assumed that when the player accurately hits 17-point tripling in the 01 game, the player wins the victory. In this case, a virtual player having a tendency of "weak to tension" is nervous at an important time when the winning or losing is decided by one throwing motion, and as a result, the accuracy rate for 17-point tripling may be rapidly lowered. Further, a virtual player having a tendency of "lack of persistence" shows a high accuracy rate at an early stage of the match-up dart game and the accuracy rate may be lowered at the time of starting a second half. The aforementioned situations and tendencies are just an example and the accuracy rate of the virtual player may be configured by reflecting variation of accuracy rate depending on a situation of a real dart game player and/or accuracy rate depending on a game play tendency so that the dart game player further feels reality. In this case, the dart game apparatus 100 may provide a more realistic virtual team mate to the player of the dart game match-up mode and the dart game player may play the match-up dart game mode more realistically.

The controller 190 aggregates scores of respective players of each team for each team and compares team scores to decide the winning or losing, in the team dart game match-up mode. Further, the controller 190 determines whether each team member achieves an object of the 01 game for each team and compares the number of team members that achieve the object of the 01 game for each team to decide the winning or losing, in the case of the 01 game mode. The controller 190 compares a sum total of scores acquired by the team members according to each game mode for each team or compares the number of team members that achieve an object of a specific game mode for each team to decide the winning or losing. Further, the controller 190 compares whether a score acquired by aggregating the scores of the respective players first reaches a specific score for each team to decide the winning or losing. The above description is just an example and may include an appropriate game scheme that may distinguish the winning or losing for each team.

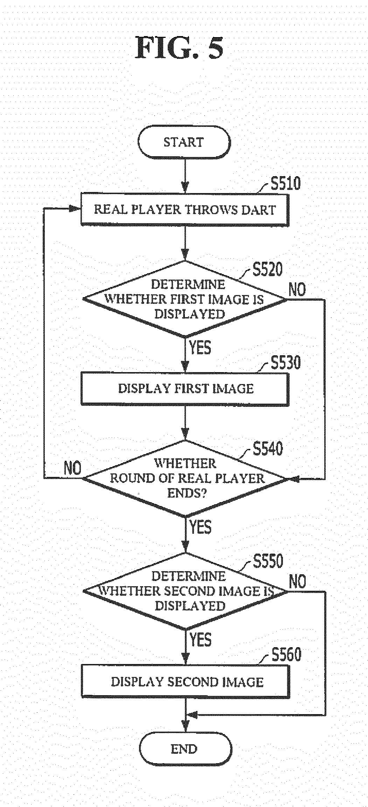

FIG. 5 is a flowchart for describing a dart game match-up mode according to an embodiment of the present disclosure.

The dart game apparatus 100 may provide a dart game match-up mode in which a team including the virtual player and the real player together may play the game with at least one other team. In this case, one or more virtual players and one or more real players may be provided.

For example, the dart game apparatus 100 may provide a dart game match-up mode in which a first real player and a first virtual player become the same team to play the game and provide a dart game match-up mode in which the first real player, the first virtual player, and a second virtual player become the same team to play the game.

Further, the dart game apparatus 100 may provide a dart game match-up mode in which a team including only the virtual players and a team including only the real players, or a combination thereof may play the game with at least one other team. In this case, one or more virtual players and one or more real players may be provided.

For example, the dart game apparatus 100 may provide a dart game match-up mode in which the first real player and the second real player become a first team and the virtual player and the second virtual player become a second team to play the game.

In step S510, the dart game apparatus 100 may allow the real player to throw the dart. For example, the dart game apparatus 100 displays a phrase "Start" in the display unit 142 to allow the real player to throw the dart.

The dart game apparatus 100 may acquire information on the hit location of the dart pin thrown by the real player. For example, the dart game apparatus 100 may acquire information indicating whether the hit location of the dart pin thrown by the real player is the double bull 410, the single bull 420, the small single 430, the triple ring 440, the large single 450, or the double ring 460 among the regions of the dart target 110.

In step S520, the dart game apparatus 100 may decide whether to display the predetermined first image according to the hit location of the dart pin thrown from the real player. When the dart game apparatus 100 determines to display the first image, step S530 may be performed and if not, step S540 may be performed.

The dart game apparatus 100 may set a case where the first image is displayed in advance. For example, the controller 190 may set the first image to be displayed when the hit location is a double bull 410, a single bull 420, a triple ring 440, and a double ring 460. The controller 190 may set the first image to be displayed by receiving the input of the user and may set the first image to be displayed according to data received from an external device and is not limited thereto.

The dart game apparatus 100 may determine whether to display the first image according to the hit location of the dart pin thrown by the real player.

For example, when the hit location is the triple ring 440 and when the hit location is the double bull 410, the first image is set to be displayed in advance and when the hit location of the dart pin thrown by the real player is the triple ring 440 or the double bull 410, the dart game apparatus 100 may determine to display the first image.

In step S530, the dart game apparatus 100 may display the first image.

The first image may be an image associated with the virtual player. For example, the first image may be associated with the virtual player that forms the same team as the real player among the virtual players participating in the dart game. Further, the first image may be associated with the virtual player that forms a different team from the real player among the virtual players participating in the dart game. In addition, the first image may be associated with at least one of one or more virtual players which do not participate in the dart game, but are stored in the dart game apparatus 100.

The first image may include an effect image for the hit location of the throw dart pin. For example, the first image may include an image in which the virtual player appears and shouts triple, an image in which the virtual player appears and shouts double, and an image in which the virtual player appears and shouts double, but is not limited thereto.

A time at which the first image is displayed may be set in advance. For example, the first image may be displayed in the display unit 142 at the same time as the dart pin thrown by the real player arrives at the dart target 110 and the first image may be displayed within a predetermined time after the dart pin arrives at the dart target 110, but is not limited thereto.

A display period of the first image may be set in advance. For example, the display period of the first image may be set between 0.8 seconds and 1.2 seconds in advance so as to prevent a large influence from being exerted on a progress time of the dart game, but is not limited thereto.

The first image may be displayed in a part or the entirety of the display unit 142. For example, the first image may be displayed in a portion of a lower left region in the display unit 142. Further, the first image may be displayed in a part of a lower right region in the display unit 142 and may be displayed in the entirety of the display unit 142, but is not limited thereto.

When the display unit 142 is constituted by the plurality of monitors, the first image may be displayed in each of the plurality of monitors. For example, the first image may be displayed at the same location of each of the plurality of monitors and may be displayed at different locations in the plurality of respective monitors and is not limited thereto.

In step S540, the dart game apparatus 100 may determine whether the current round of the real player ends.

When the dart game apparatus 100 determines that the current round of the real player ends, step S550 may be performed and if not, step S510 may be performed.

In step S550, the dart game apparatus 100 may determine whether to display the second image.

The dart game apparatus 100 may set a case where the second image is displayed in advance. For example, the dart game apparatus 100 may calculate the sum of the scores of the plurality of dart pins thrown in one round and set the second image to be displayed when the calculated value is larger than a predetermined value. Further, the dart game apparatus 100 may set the second image to be displayed when the hit locations of one or more dart pins among the plurality of dart pins thrown in one round correspond to specific regions. The dart game apparatus 100 is not limited thereto and may set the second image to be displayed in the display unit 142 according to the hit locations of the plurality of dart pins thrown in one round in various cases.

The dart game apparatus 100 may acquire from the sensing unit 120 information on the hit locations of the plurality of dart pins thrown by the real player in one round. For example, when the real player throws the dart pin three times in one round, information on the hit locations of respective dart pins three times may be obtained from the sensing unit 120.

The dart game apparatus 100 may determine whether to display the second image according to the hit locations of the plurality of dart pins. For example, the dart game apparatus 100 may calculate the sum of the scores which match the hit locations of the plurality of dart pins, respectively and determine to display the second image when the calculated value is equal to or larger than a predetermined value.

As another example, the dart game apparatus 100 may determine to display the second image when regions including the hit locations of two dart pins among the hit locations of three dart pins thrown in one round are the same as each other.

In step S560, the dart game apparatus 100 may display the second image.

The second image may be the image associated with the virtual player. For example, the second image may be associated with the virtual player that forms the same team as the real player among the virtual players participating in the dart game. Further, the second image may be associated with the virtual player that forms a different team from the real player among the virtual players participating in the dart game. In addition, the second image may be associated with at least one of one or more virtual players which do not participate in the dart game, but are stored in the dart game apparatus 100.

The second image may include an AWARD image for the hit locations of the dart pins thrown in one round. For example, the second image may include a phenomenon in which the virtual player appears and shouts nice, which indicates a meaning of praising the real player, a phenomenon in which the virtual player appears and shouts good, which indicates a meaning of praising the real player, an image in which the virtual player appears and shouts cheer, which indicates a meaning of praising the real player, an image in which the virtual player appears and shouts perfect, which indicates that the real player is perfect, and the like, but is not limited thereto.

A time at which the second image is displayed may be set in advance. For example, the second image may be displayed at the time when one round ends, at the time when a predetermined time elapses after the end of one round, or at the time when the input of the user is received after the end of one round, but is not limited thereto.

The display period of the second image may be set in advance. For example, the display period of the second image may be set between 0.8 seconds and 1.2 seconds in advance so as to prevent the large influence from being exerted on the progress time of the dart game, but is not limited thereto.

The second image may be displayed in a part or the entirety of the display unit 142. For example, the second image may be displayed in a part of the lower left region in the display unit 142. Further, the second image may be displayed in a part of the lower right region in the display unit 142 and may be displayed in the entirety of the display unit 142, but is not limited thereto.

When the display unit 142 is constituted by the plurality of monitors, the second image may be displayed in each of the plurality of monitors. For example, the second image may be displayed at the same location of each of the plurality of monitors or at different locations of the plurality of respective monitors and is not limited thereto.

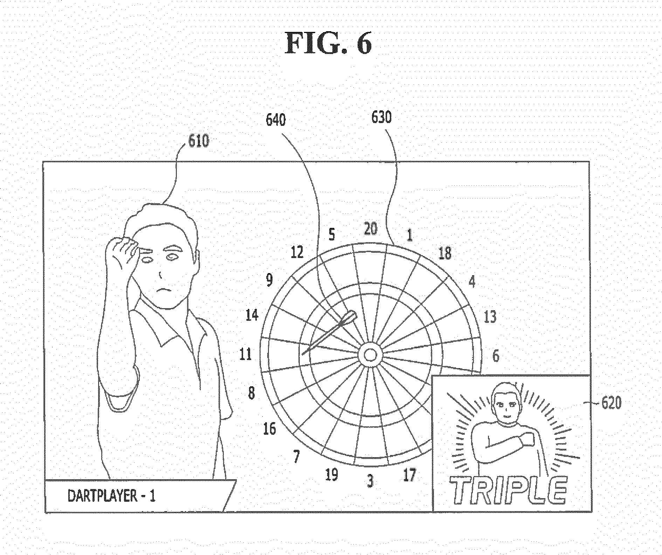

FIG. 6 is a diagram for describing an embodiment of a first image among embodiments of the present disclosure.

The dart game apparatus 100 may allow the first image to be displayed in the display unit 142 according to the hit location of the dart pin thrown by the real player. The first image may be an image associated with the virtual player. Herein, one or more virtual players may be provided.

For example, referring to FIG. 6, the dart game apparatus 100 may display an image in which the virtual player cries acclamation as the first image (602). The first image may be displayed in a part of the display (602).

Further, the dart game apparatus 100 may display the first image 602 together with an image 610 of a real player and a shape 603 of a dart target 630. The shape of the dart target 630 may display a hit location 640 of a dart pin thrown by the real player.

Further, the dart game apparatus 100 may display the first image 620 including a phrase (e.g., "TRIPLE") representing the hit location of the dart pin thrown by the real player.

The aforementioned embodiments are just an embodiment of the present disclosure and the dart game apparatus 100 is not limited thereto and may display the first image by various modes.

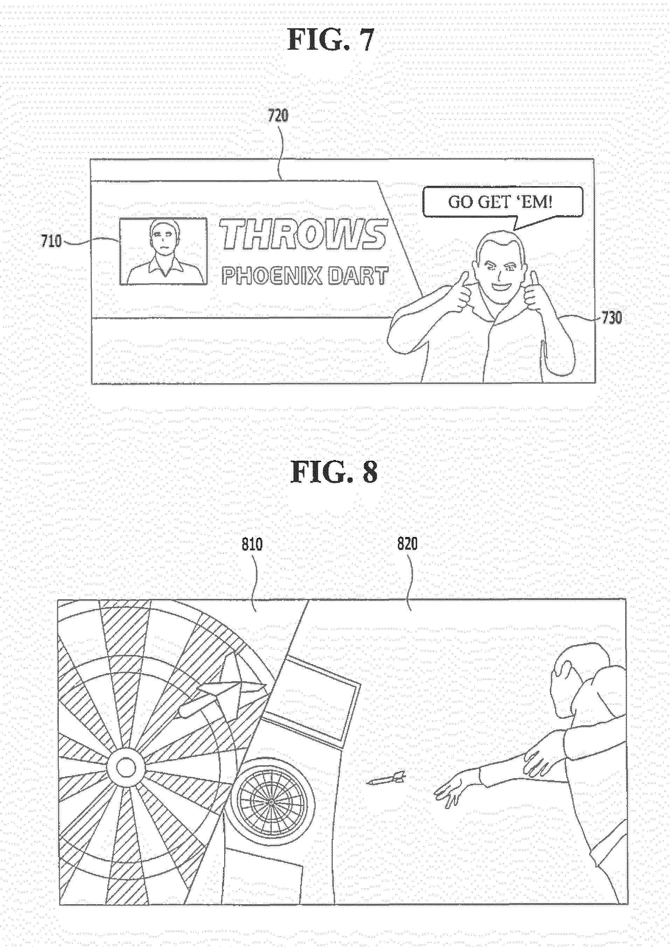

FIG. 7 is a diagram for describing an embodiment of a third image among the embodiments of the present disclosure.

According to an embodiment of the present disclosure, the dart game apparatus 100 may predict the round of the real player and allow a third image to be displayed in the display unit 142 before the round of the real player starts according to the identification information.

The dart game apparatus 100 may predict the round of the real player. For example, when a first player and a second player perform a dart match-up game and the round of the second player ends, the dart game apparatus 100 may predict that the round of the first player will start.

The dart game apparatus 100 may allow the third image to be displayed in the display unit 142 according to the identification information of the real player before the round of the real player starts. For example, when the first player and the second player perform the dart match-up game and the round of the second player ends, the dart game apparatus 100 may allow the third image to be displayed in the display unit 142 before the round of the first player starts according to the identification information of the first player.

The identification information means various information related to the real player. For example, the identification information may include a score obtained by the real player before the start of a current round, points per dart (PPD) of the real player, marks per round (MPR) of the real player, a member grade of the real player, a record of the real player, and the like, but is not limited thereto and may include various information related to the real player.

The third image may be the image associated with the virtual player. Herein, one or more virtual players may be provided.

Referring to FIG. 7, the third image may be associated with the virtual player that constitutes the same team as the real player among the virtual players participating in the dart game.

Further, the third image may include the virtual player and a cheer phrase (730) and the second image may include an image in which the virtual player says the cheer phrase and is not limited thereto.

Further, the third image may include a profile image 710 of a next real player. The third image may include identification information of the next real player (720).

FIG. 8 is a diagram illustrating an image associated with throwing of a dart pin by a virtual player among the embodiments of the present disclosure.

According to an embodiment of the present disclosure, the dart game apparatus 100 may sense the round of the virtual player and display an image related to dart pin throwing of the virtual player while the sensed round of the virtual player is played.

The dart game apparatus 100 may sense the round of the virtual player. For example, when the first real player and the first virtual player play the dart match-up mode and when the round of the first real player ends, the dart game apparatus 100 may sense that the current round is the round of the first virtual player.

The dart game apparatus 100 may display the image related to dart pin throwing of the virtual player while the round of the virtual player is played. For example, the dart game apparatus 100 may allow an operating image 820 in which the virtual player throws the dart pin, an image in which the dart pin moves toward the dart target, an image 810 in which the thrown dart pin reaches the dart target, and the like to be displayed in the display unit 142.

The dart game apparatus 100 may display the image 810 in which the virtual player throws the dart pin, the image in which the dart pin moves toward the dart target, and the image 820 in which the dart pin reaches the dart target sequentially according to a time sequence.

Further, the dart game apparatus 100 may simultaneously display the image 810 in which the virtual player throws the dart pin, the image in which the dart pin moves toward the dart target, and the image 820 in which the dart pin reaches the dart target on one screen.

The aforementioned embodiments are just an embodiment of the present disclosure and the dart game apparatus 100 is not limited thereto and may display various images associated with the dart pin throwing of the virtual player.

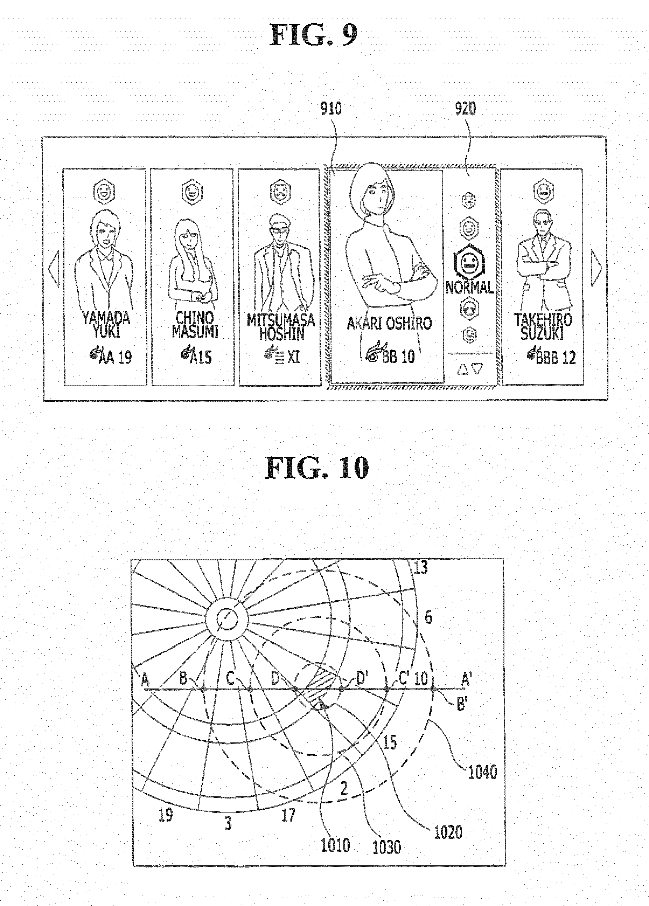

FIG. 9 is a diagram for describing an embodiment of selecting the virtual player among the embodiments of the present disclosure.

The dart game apparatus 100 may display a screen that enables a user to select a virtual player.

For example, the dart game apparatus 100 may display one or more virtual players selectable by the user at least in the form of a card disposed in a transverse direction. Further, the dart game apparatus 100 may dispose one or more virtual players selectable by the user in the form of a card disposed in a longitudinal direction and is not limited thereto.

In addition, the dart game apparatus 100 may display a condition 920 of the virtual player on the card of the virtual player selectable by the user. The dart game apparatus 100 may display the condition of the virtual player as three types or five types and is not limited thereto and may variously display the condition of the virtual player.

The dart game apparatus 100 may select a virtual player that will participate in the dart game among the displayed virtual players. In this case, one or more virtual players may be provided.

For example, the dart game apparatus 100 may select at least one virtual player that will participate in the dart game based on the user input among the plurality of displayed virtual players.

When the dart game apparatus 100 selects the virtual player according to the user input, the dart game apparatus 100 may display that the virtual player is selected. For example, the dart game apparatus 100 may display a highlight effect showing that the virtual player is selected on a card contour line of the selected virtual player (910).

The dart game apparatus 100 may provide a dart game match-up mode to play the game together with one or more selected virtual players.

For example, the dart game apparatus 100 may provide a dart game match-up mode in which the first real player and the selected virtual player constitute the same team to play the game.

For example, the dart game apparatus 100 may provide a dart game match-up mode in which the first real player and the second real player become a first team and the selected first virtual player and the selected second virtual player become a second team to play the game.

FIG. 10 is a diagram for describing dart game play of the virtual player among the embodiments of the present disclosure.

The dart game apparatus 100 may provide the dart game match-up mode among a plurality of teams constituted by one or more players, respectively. Further, each of the plurality of teams may include at least one virtual player.

A dart game ability of the virtual player may be adjusted by artificial intelligence (AI). For example, the dart game ability of the virtual player may be adjusted according to a level of the real player included in the same team as the virtual player, a situation of the team including the virtual player, a predetermined play tendency of the virtual player, an ability of the real player included in the same team as the virtual player, abilities of players included in a team different from the virtual player, a score obtained by an opposite team to the virtual player, a characteristic of the virtual player, or a combination thereof.

The ability of the virtual player may be previously adjusted or adjusted in real time. For example, the ability of the virtual player may be previously set according to an input of the real player and adjusted in real time while the dart game play is performed.

According to the embodiment referring to FIG. 10, a situation is assumed, in which the virtual player needs to hit 15-point tripling 1010.

In this case, the accuracy rate of the virtual player may form concentric circles 1020, 1030, and 1040 based on the 15-point tripling. In the case of a virtual player having a high ability, a probability (a probability of hitting a region in the concentric circle 1020) of hitting the 15-point tripling is high and a probability (a probability of hitting a region outside the concentric circle 1020) of hitting an adjacent score region may be lowered rapidly according to the concentric circle as being farther from the 15-point tripling.

For example, when it is assumed that the probability that the virtual player will throw the dart into the concentric circle 1020 is X, the probability of throwing the dart between the concentric circle 1020 and the concentric circle 1030 is X/16, the probability of throwing the dart on the concentric circle 1040 in the concentric circle 1030 is X/32, the probability of throwing the dart outside the concentric circle 1040 is X/64, and the like and the accuracy rate may be rapidly lowered according to the concentric circle as being farther from the target.

However, in the case of a virtual player having a low ability, the probability (the probability of hitting the region in the concentric circle 1020) of hitting the 15-point tripling is lower than that of the virtual player having the high ability and the accuracy probability may be gradually lowered as being farther from the 15-point tripling.

For example, when it is assumed that the probability that the virtual player will throw the dart into the concentric circle 1020 is Y, the probability of throwing the dart between the concentric circle 1020 and the concentric circle 1030 is Y/2, the probability of throwing the dart on the concentric circle 1040 in the concentric circle 1030 is Y/4, the probability of throwing the dart outside the concentric circle 1040 is Y/8, and the like and the accuracy rate may be lowered gradually according to the concentric circle as being farther from the target.

Therefore, the probability (the probability of hitting the region in the concentric circle 1020) that the virtual player having the low ability will accurately hit the 15-point tripling may be lower than the probability that the virtual player having the high ability will accurately hit the 15-point tripling.

In this case, the dart game apparatus 100 may correct a difference in level among the real players by approximately controlling the ability of the virtual player.

For example, the dart game apparatus 100 adjusts the ability of the virtual player included in the team of the real player having the relatively higher ability at a high level and adjusts the ability of the virtual player included in the team of the real player having the relatively lower ability at a low level to correct the difference in level among the real players. As a result, the real players may play an exciting dart game match-up mode.

According to another embodiment referring to FIG. 10, a situation is assumed, in which the virtual player needs to hit the 15-point tripling 1010.

In this case, a virtual player having a tendency of "weak to tension" becomes tense at an important time when the win or loss is decided by one throwing motion, and as a result, the accuracy rate (the probability of hitting the region in the concentric circle 1020 in all regions) for the 15-point tripling 1010 may be rapidly decreased.

Further, for a virtual player having a tendency of "strong to win" is nervous, the accuracy rate (the probability of hitting the region in the concentric circle 1020 in all regions) for the 15-point tripling 1010 may be rapidly increased at an important time when the winning or losing is decided by one throwing operation.

The aforementioned embodiments are just an example of the present disclosure and are not limited thereto and the ability of the virtual player may be adjusted in real time according to various situations.

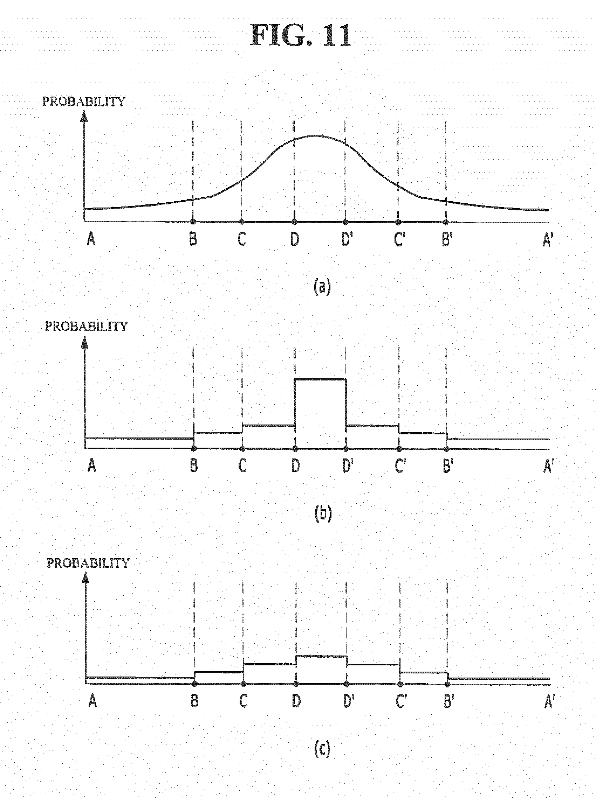

FIG. 11 is a diagram for describing an accuracy rate of the virtual player among the embodiments of the present disclosure.

Referring to FIG. 11A, the accuracy rate of the virtual player may vary according to a normal distribution curve.

For example, referring to FIG. 10, when the virtual player needs to hit the 15-point tripling 1010, the cross-sectional view of the accuracy rate of the virtual player may be illustrated in FIG. 11A. The accuracy rate of the virtual player is highest between D and D' and as being farther from the dart target 1010, the accuracy rate may be lowered according to the normal distribution curve.

Referring to FIG. 11B, the accuracy rate of the virtual player may vary in a step form.

For example, referring to FIG. 10, when the virtual player needs to hit the 15-point tripling 1010, the cross-sectional view of the accuracy rate of the virtual player may be illustrated in FIG. 11B. The accuracy rate of the virtual player is highest between D and D' and as being farther from the dart target 1010, the accuracy rate may be lowered in the step form.

Referring to FIGS. 11B and 11C, the ability of the virtual player may vary.

For example, referring to FIG. 10, when the virtual player needs to hit the 15-point tripling 1010, the accuracy rate of the virtual player having the high ability may be illustrated in FIG. 11B. That is, in the case of the virtual player having the high ability, a probability (a probability of hitting a region in the concentric circle 1020) of hitting the 15-point tripling is high and a probability (a probability of hitting a region outside the concentric circle 1020) of hitting an adjacent score region may be lowered rapidly according to the concentric circle as being farther from the 15-point tripling.

For example, referring to FIG. 10, when the virtual player needs to hit the 15-point tripling 1010, the accuracy rate of the virtual player having the low ability may be illustrated in FIG. 11C. That is, the probability (the probability of hitting the region in the concentric circle 1020) that the virtual player having the low ability will hit the 15-point tripling is lower than that of the virtual player having the high ability and the accuracy probability may be gradually lowered as being farther from the 15-point tripling.

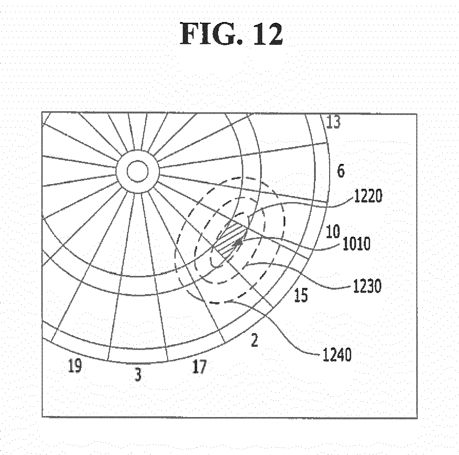

FIG. 12 is a diagram for describing that the accuracy rate of the virtual player is set as an asymmetric probability distribution among the embodiments of the present disclosure.

The accuracy rate for the dart target by the virtual player may vary depending on the characteristic of the virtual player and the characteristic of the virtual player may include a dart pin throwing tendency of the virtual player. The dart pin throwing tendency means a habit in which the player throws the dart pin. For example, when the player frequently throws the dart pin in a forward direction, the dart pin throwing tendency of the player may be the forward direction. Further, when the player frequently throws the dart pin in a slant direction, the dart pin throwing tendency of the player may be the slant direction.

The dart pin throwing tendency of the virtual player may be predetermined. For example, when the first virtual player is a virtual player created by reflecting the first real player and a statistic dart pin throwing tendency of the first real player is the slant direction, the dart pin throwing tendency of the first virtual player may be the slant direction.

Further, the dart pin throwing tendency may vary depending on an input of the real player. For example, when the real player selects the dart pin throwing tendency of the virtual player as the slant direction, the dart pin throwing tendency of the virtual player may be set as the slant direction.

Further, the dart pin throwing tendency may vary depending on data received from an external device. For example, when the dart game apparatus 100 receives information on the dart pin throwing tendency of the virtual player from the external device, the dart game apparatus 100 may set the dart pin throwing tendency of the virtual player based on the received information.

The dart pin throwing tendency of the virtual player may be previously set before the dart game starts and set while the dart game is performed and modified in real time as the dart game is performed.

The accuracy rate for the dart target by the virtual player may vary depending on the dart pin throwing tendency of the virtual player. For example, when the dart pin throwing tendency of the virtual player is the forward direction, the accuracy rate for the dart target by the virtual player may be set according to a symmetric probability distribution and when the dart pin throwing tendency of the virtual player is the slant direction, the accuracy rate for the dart target by the virtual player may be set according to an asymmetric probability distribution.

For example, when the dart pin throwing tendency of the virtual player is the forward direction, the accuracy rate of the virtual player may vary according to the concentric circle. Further, when the dart pin throwing tendency of the virtual player is the slant direction, the accuracy rate of the virtual player may vary according to a slant oval.

According to the embodiment referring to FIG. 10, the situation is assumed, in which the virtual player needs to hit 15-point tripling 1010 (it is assumed that the dart pin throwing tendency of the virtual player is a forward direction).

In this case, the accuracy rate of the virtual player may vary depending on concentric circles 1020, 1030, and 1040 based on the 15-point tripling. The probability (the probability of hitting a region in the concentric circle 1020) that the dart pin thrown by the virtual player will hit the 15-point tripling is relatively high and the probability (the probability of hitting a region outside the concentric circle 1020) that the dart pin will hit the adjacent score region may be relatively lowered according to a concentric circle as being farther from the 15-point tripling.

According to the embodiment referring to FIG. 12, the situation is assumed, in which the virtual player needs to hit 15-point tripling 1010 (it is assumed that the dart pin throwing tendency of the virtual player is the slant direction).

In this case, the accuracy rate of the virtual player may vary depending on asymmetric ovals 1220, 1230, and 1240 based on the 15-point tripling. The probability (the probability of hitting a region in the concentric circle 1220) that the dart pin thrown by the virtual player will hit the 15-point tripling is relatively high and the probability (the probability of hitting a region outside the concentric circle 1220) that the dart pin will hit the adjacent score region may be relatively lowered according to the slant oval as being farther from the 15-point tripling.

The aforementioned embodiments are just an example of the present disclosure and are not limited thereto and the dart game apparatus 100 may set the accuracy rate for the dart target by the virtual player under various situations by various methods.

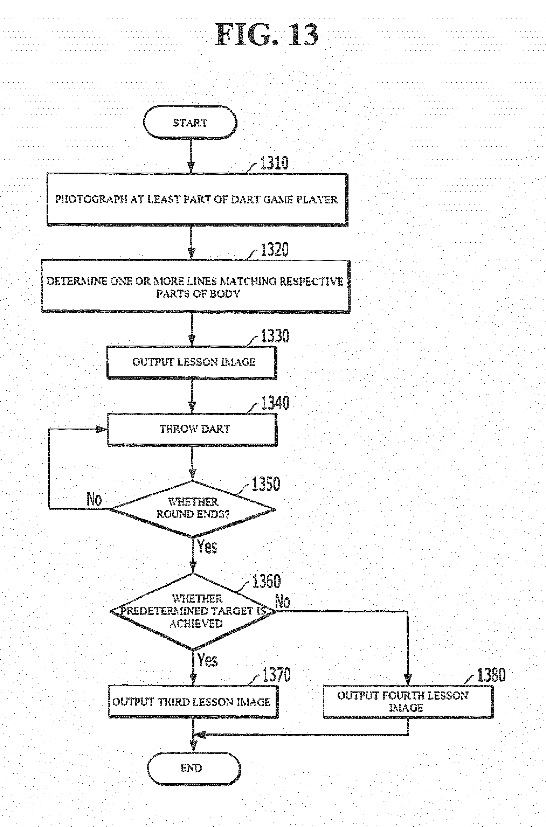

FIG. 13 is a flowchart for describing a dart game lesson mode associated with an embodiment of the present disclosure.

In step 1310, the camera unit 150 of the dart game apparatus 100 may photograph at least a part of the dart game player. For example, the camera unit 150 may photograph the upper body of the dart game player in order to photograph the throwing motion of the dart game player.

In step 1320, the controller 190 of the dart game apparatus 100 may set one or more lines which match the respective parts of the body of the player in an image acquired by photographing the player. As described above, the one or more lines may include at least one line of the head circle matching the head of the player, the arm line matching the arm, and the elbow line matching the elbow. The controller 190 may set the one or more lines by analyzing the photographed image. Further, the player may adjust locations of the one or more lines and match the one or more lines with the respective parts of the body in an image acquired by adding one or more lines to the image acquired by photographing the player displayed in the display unit 142 through the user input unit 130. In addition, the display unit 142 displays the image acquired by adding the one or more lines to the image acquired by photographing the player and the player moves in such a manner that the body thereof matches one or more lines while viewing the photographed image to match the one or more lines with the body.

In step 1330, the display unit 142 of the dart game apparatus may output the lesson image. The lesson image may include an image loaded from the memory, an image loaded from the server, and the like according to the determination by the controller 190. The lesson image may include the second lesson image in which the virtual player describes contents regarding the dart game or describes a posture of throwing the dart pin.

The second lesson image may be the image associated with the virtual player. For example, the second lesson image may be associated with the virtual player participating in the dart game. Further, the second lesson image may be associated with at least one of one or more virtual players which do not participate in the dart game, but are stored in the dart game apparatus 100.

The second lesson image may include the images of the description regarding the dart game mode, and the description of the posture of throwing the dart pin. For example, the second lesson image may include an image in which the virtual player performs the description regarding each game mode. For example, the second lesson image may include a description image related to stance of the virtual player who stands in the dart game performed by the virtual player, a description image related to how to hold the dart pin, a description image related to a posture of each part of the body such as a head, an arm, a hand, an elbow, and a shoulder at the time of aiming the dart pin by clasping the dart pin, a description image related to a muscle to be used in an operation to throw the dart pin, a description image related to a release operation for releasing the dart pin so that the dart pin moves forward and the dart pin flies forward, and the like.

A time at which the second lesson image is displayed may be set in advance. For example, the second lesson image may be displayed at a time when the game mode is selected, at a time when a predetermined time elapses after the game mode is selected, at a time before the game mode is selected and the dart pin is thrown, at a time of receiving a user's input of requesting the lesson image, at a time when the player stands by before the game, and the like, but is not limited thereto.

The second lesson image may be displayed in a part or the entirety of the display unit 142. For example, the second lesson image may be displayed in a part of the lower left region in the display unit 142. Further, the second lesson image may be displayed in a part of the lower right region in the display unit 142 and may be displayed in the entirety of the display unit 142, but is not limited thereto.

When the display unit 142 is constituted by the plurality of monitors, the second lesson image may be displayed in each of the plurality of monitors. For example, the second lesson image may be displayed at the same location of each of the plurality of monitors and may be displayed at different locations in the plurality of respective monitors and is not limited thereto.

In step 1340, the dart game apparatus 100 may allow the player to throw the dart. For example, the dart game apparatus 100 displays a phrase "Start" in the display unit 142 to allow the player to throw the dart.

In step S1350, the dart game apparatus 100 may determine whether a current round of the player ends. For example, in the case of the dart game that throws the dart pin three times in one round, the controller 190 may determine that the round of the player ends when it is sensed that the dart pin is thrown three times as the sensing result of the sensing unit 120. When the dart game apparatus 100 determines that the current round of the player ends, step 1360 may be performed and if not, step S1340 may be performed.

In step S1360, the dart game apparatus 100 may decide whether the player achieves the predetermined object. For example, the predetermined object may include a case where a side-to-side deviation degree is smaller than an average degree when a player who throws the dart pin to deviate from the hit location of the dart pin from side to side throws the dart pin. The dart game apparatus 100 may provide to the player a lesson for the throwing posture that prevents the hit location of the dart pin from deviating from side to side in advance.

When the dart game apparatus 100 determines that the player achieves the predetermined object, step 1370 may be performed and if not, step S1380 may be performed.

In step S1370, the dart game apparatus 100 may output the third lesson image.

The third lesson image may be the image associated with the virtual player. For example, the third lesson image may be associated with the virtual player participating in the dart game. Further, the third lesson image may be associated with at least one of one or more virtual players which do not participate in the dart game, but are stored in the dart game apparatus 100.

The third lesson image may include award images for hit locations of dart pins thrown in one round. The third lesson image may include an image which may be output when the real player makes the result depending on the lesson. For example, when inaccuracy of the dart pin due to the throwing posture of the real player is corrected by the lesson, the third lesson image may be output. For example, the third lesson image may include a replay of the dart pin throwing of the real player, a comparison image of the throwing operation with higher accuracy after the correction and the image of the previous throwing, an image in which the virtual player appears and shouts nice or good indicating a meaning of praising the real player or shouts cheer indicating a meaning of congratulation while showing the replay and the comparison image, an image in which the virtual player shouts perfect indicating that the real player is perfect, or the like, but is not limited thereto.

A time at which the third lesson image is displayed may be set in advance. For example, the third lesson image may be displayed at the time when one round ends, at a time within a predetermined time after the end of one round, at a time which a user's input is received after one round ends, or when the throwing operation of the player is performed without deviating from one or more lines, but is not limited thereto.

The display period of the third lesson image may be set in advance. For example, the display period of the third lesson image may be set between 0.8 seconds and 1.2 seconds in advance so as to prevent the large influence from being exerted on the progress time of the dart game, but is not limited thereto.

The third lesson image may be displayed in a part or the entirety of the display unit 142. For example, the third lesson image may be displayed in a part of the lower left region in the display unit 142. Further, the third lesson image may be displayed in a part of the lower right region in the display unit 142 and may be displayed in the entirety of the display unit 142, but is not limited thereto.

When the display unit 142 is constituted by the plurality of monitors, the third lesson image may be displayed in each of the plurality of monitors. For example, the third lesson image may be displayed at the same location of each of the plurality of monitors or at a different location of each of the plurality of monitors and is not limited thereto.

In step S1380, the dart game apparatus 100 may output a fourth lesson image.

The fourth lesson image may be the image associated with the virtual player. For example, the fourth lesson image may be associated with the virtual player participating in the dart game. Further, the fourth lesson image may be associated with at least one of one or more virtual players which do not participate in the dart game, but are stored in the dart game apparatus 100.

The fourth lesson image may include a consolation or reprimand image with respect to the hit locations of the thrown dart pin. The fourth lesson image may include an image that may be output when the player fails to produce the result according to the lesson. For example, even though a lesson for inaccuracy of the dart pin by the throwing posture of the real player is performed by the dart game apparatus 100, when the inaccuracy of the dart pin is not corrected by the lesson, the fourth lesson image may be output. For example, the fourth lesson image may include the replay for the throwing of the dart pin of the real player, a comparison imagebetween the replay of the throwing of the dart pin and a correct throwing motion, a comparison image between the replay for the throwing of the dart pin and one or more lines which match the respective parts of the body of the player, or the like and is not limited thereto.

A time at which the fourth lesson image is displayed may be set in advance. For example, the fourth lesson image may be displayed at the time when one round ends, at a time within a predetermined time after the end of one round, at a time when the input of the user is received after one round ends, or when the throwing operation of the player is performed without deviating from one or more lines, but is not limited thereto.

The display period of the fourth lesson image may be set in advance. For example, the display period of the fourth lesson image may be set between 0.8 seconds and 1.2 seconds in advance so as to prevent the large influence from being exerted on the progress time of the dart game, but is not limited thereto.

The fourth lesson image may be displayed in a part or the entirety of the display unit 142. For example, the fourth lesson image may be displayed in a part of the lower left region in the display unit 142. Further, the fourth lesson image may be displayed in a part of the lower right region in the display unit 142 and may be displayed in the entirety of the display unit 142, but is not limited thereto.

When the display unit 142 is constituted by the plurality of monitors, the fourth lesson image may be displayed in each of the plurality of monitors. For example, the fourth lesson image may be displayed at the same location of each of the plurality of monitors or at a different location of each of the plurality of monitors and is not limited thereto.

Further, the dart game apparatus 100 may output the first lesson image throughout the aforementioned steps.

The first lesson image may include an image acquired by adding one or more lines which may match the respective parts of the body of the player to the image of the player, which is photographed by the camera unit 150. As described above, one or more lines may include the head circle, the arm line, the elbow line, and the like and are not limited thereto. For example, the player may find whether his/her head is biased from side to side by deviating from the head circle (in this case, there may be a possibility that the player is positioned to be biased from side to side in the dart target, and as a result, the dart pin will hit the dart target to be biased from side to side), whether his/her arm is obliquely inclined without forming a right angle with a ground surface, and whether his/her elbow excessively moves at the time of throwing the dart pin while viewing the first lesson image. Further, for example, the player may find whether his/her foot invades the throw line and his/her stance posture is not slightly bent but straightened while viewing the first lesson image.

The first lesson image may be displayed in a part or the entirety of the display unit 142. For example, the first lesson image may be displayed in a part of the lower left region in the display unit 142. Further, the first lesson image may be displayed in a part of the lower right region in the display unit 142 and may be displayed in the entirety of the display unit 142, but is not limited thereto.

When the display unit 142 is constituted by the plurality of monitors, the first lesson image may be displayed in each of the plurality of monitors. For example, the first lesson image may be displayed at the same location of each of the plurality of monitors or at a different location of each of the plurality of monitors and is not limited thereto.

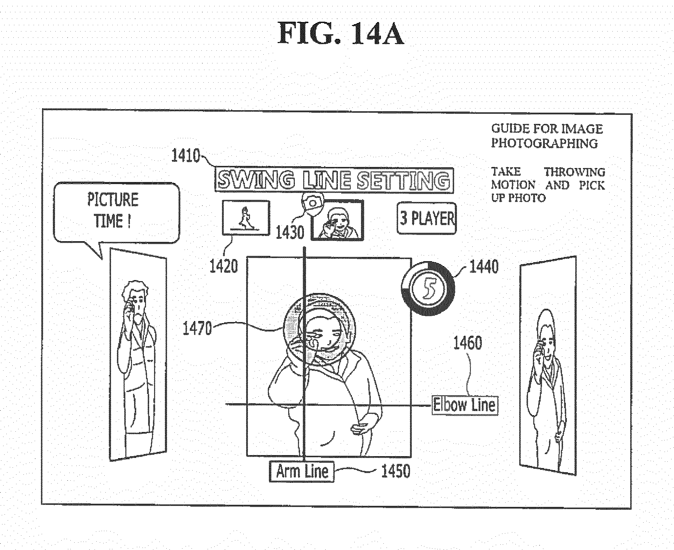

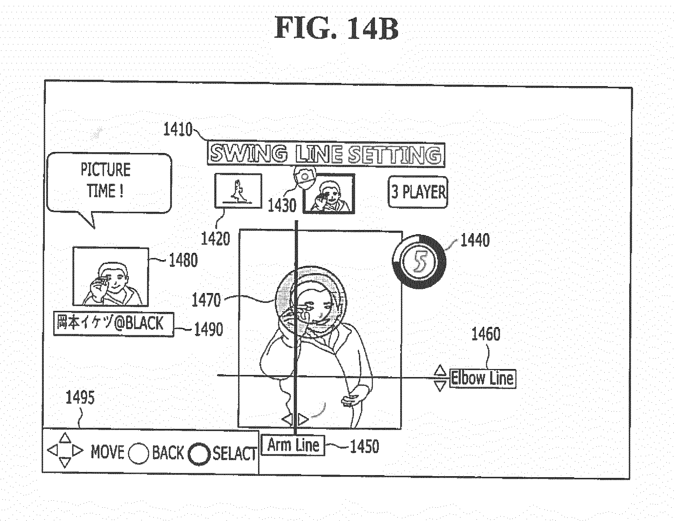

FIGS. 14A and 14B are diagrams for describing an embodiment of a first lesson image among the embodiments of the present disclosure.

FIG. 14A is a diagram for describing an embodiment of a first lesson image which may be displayed in the monitor 142-2 disposed above the dart target 110 when the display unit 142 is constituted by the plurality of monitors and FIG. 14B is a diagram for describing an embodiment of the first lesson image which may be displayed in the monitor 142-1 disposed below the dart target 110 when the display unit 142 is constituted by the plurality of monitors.

The first lesson image may include a screen title 1410, a photographing order guide 1420, a player display icon 1430 during current photographing, a timer 1440, an arm line 1450, an elbow line 1460, a head circle 1470, a player profile image 1480, a player name 1490, and a button display 1495.

The screen title 1410 may include a title of a current screen. In FIGS. 14A and 14B, Swing Line Setting is displayed to mean setting a line to be maintained when the player performs a swing motion of throwing the dart pin, but is not limited thereto.

The photographing order guide 1420 may include images on registered profiles of all real players which participate in the game. Reference numeral 1420 displayed in the throwing may be a symbol for referring to the image on the profile of player 1. A right image of reference numeral 1420 may be an image on the profile of player 2. In FIG. 14, player 3 does not participate in the game, and as a result, the image may not be displayed.

A photographing player display icon 1430 may display a player which is currently photographed among all real players that participate in the game. The photographing player display icon 1430 is illustrated by a highlight effect around a camera icon and a profile photo, but is not limited thereto.

A timer 1440 displays a count-down for photographing a photo of the player.

The arm line 1450 displays a line which may match the arm of the player. The player picks up the photo by taking the throwing posture and thereafter, adjusts the arm line 1450 from side to side through the user input unit 130 to allow the arm line 1450 to match the arm thereof.

The elbow line 1460 displays a line which may match the elbow of the player. The player picks up the photo by taking the throwing posture and thereafter, adjusts the elbow line 1460 from the top to the bottom through the user input unit 130 to allow the elbow line 1460 to match the elbow thereof.

The head circle 1470 displays a line which may match the head of the player. The player picks up the photo by taking the throwing posture and thereafter, adjusts the head circle 1470 in all directions through the user input unit 130 to allow the head circle 1470 to match the head thereof.

The player profile image 1480 may display a profile image or a default image of the player, which is set by the player.

The player name 1490 may display a name of the player or a default name which is set by the player.

The button display 1495 may display a role of each of buttons which may be input by the user. The respective buttons may serve as a move button, a select button, or a cancel button.

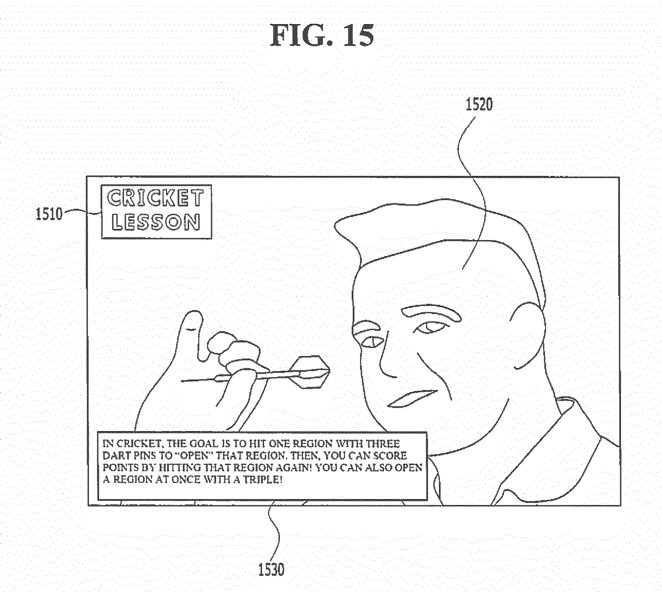

FIG. 15 is a diagram for describing an embodiment of a second lesson image among the embodiments of the present disclosure.

The second lesson image may be the image associated with the virtual player. Herein, one or more virtual players may be provided.

The second lesson image may include description of the game mode. The second lesson image may include a phrase 1510 representing the described game mode. The second lesson image may include a virtual player 1520. Further, the second lesson image may include a phrase 1530 used for the virtual player to describe the game mode. In FIG. 15, it is illustrated that the cricket mode is described, but the second lesson image is not limited thereto and may include even description of a 01 gamea count-up game or other predetermined game modes.

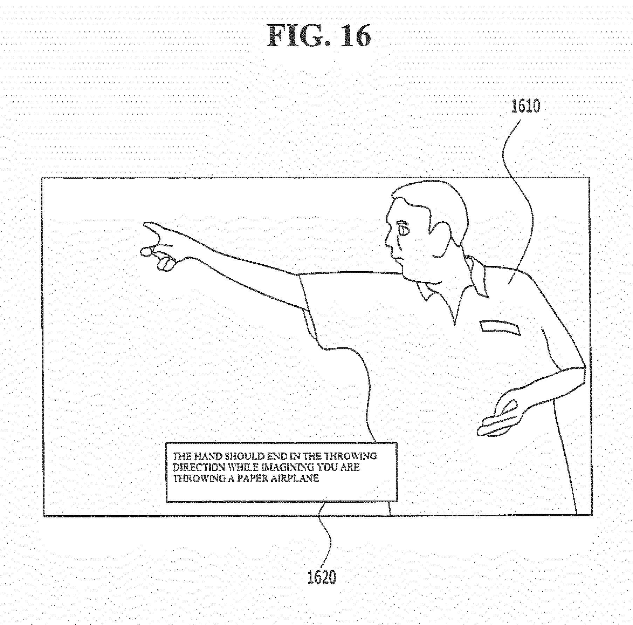

FIG. 16 is a diagram for describing an embodiment of a second lesson image among the embodiments of the present disclosure.

The second lesson image may include a description of the throwing motion of the dart pin. The second lesson image may include a phrase 1620 of the throwing motion of the dart pin which is described. The second lesson image may include a virtual player 1610. Further, in the second lesson image, the virtual player may show a demonstration of throwing the dart pin. In FIG. 16, it is illustrated that a release step is described in the throwing motion of the dart pin, but the second lesson image is not limited thereto and may include even description of predetermined steps for throwing the dart pin, which include a stance, an aim, and the like.

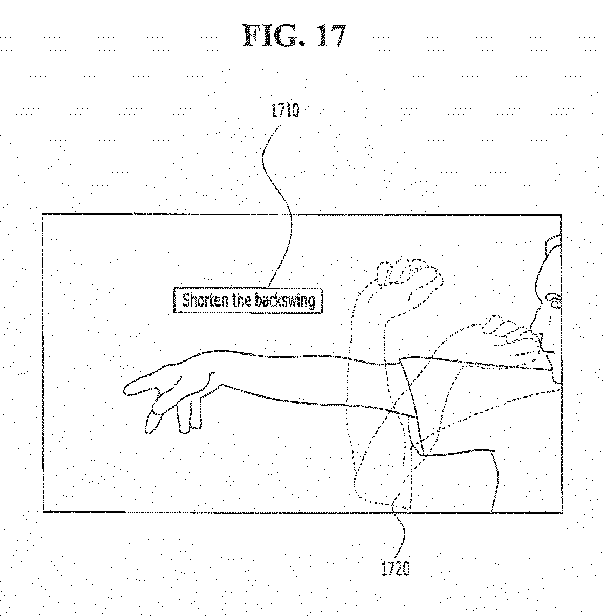

FIG. 17 is a diagram for describing an embodiment of a second lesson image among the embodiments of the present disclosure.

The second lesson image may include a description of the throwing motion of the dart pin. The second lesson image may include a phrase 1710 describing a step in which the virtual player currently shows the demonstration in the throwing motion of the dart pin. In the second lesson image, the virtual player may show a demonstration 1720 of throwing the dart pin. The second lesson image may include a close-up image of the demonstration for the throwing motion of the virtual player for detailed description of the throwing motion or a slow motion image. In FIG. 17, it is illustrated that a back swing step is described in the throwing motion of the dart pin, but the second lesson image is not limited thereto and may include even description of predetermined steps for throwing the dart pin, which include the stance, the aim, the release, and the like.

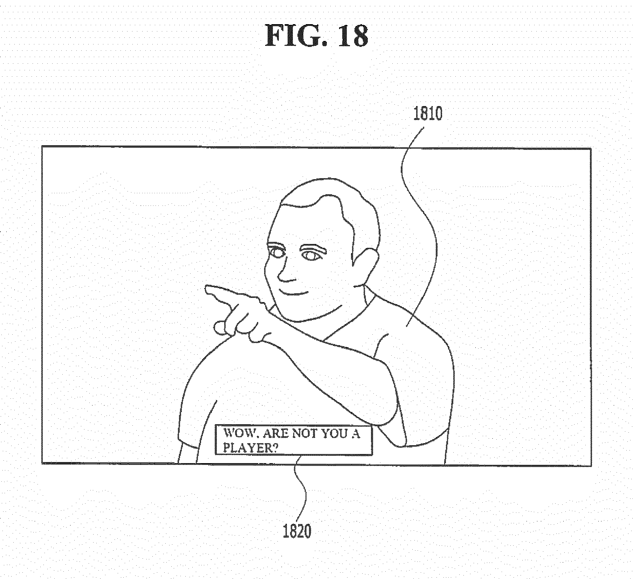

FIG. 18 is a diagram for describing an embodiment of a third lesson image among the embodiments of the present disclosure.

The third lesson image may include an award image for achieving a lesson object by the real player. The third lesson image may include an image that may be output when the real player produces a result according to the lesson. The third lesson image may include a phrase 1820 in which the virtual player praises the real player. The third lesson image may include an image of praising the real player, which includes the virtual player 1810. In FIG. 18, it is illustrated that the image in which the virtual player praises the real player is included, but the third lesson image is not limited thereto and may include a predetermined image for awarding achievement of the lesson object by the real player, which includes the replay for the dart pin throwing of the real player, a comparison image between an image for throwing before the lesson and the throwing motion after the lesson, and the like.

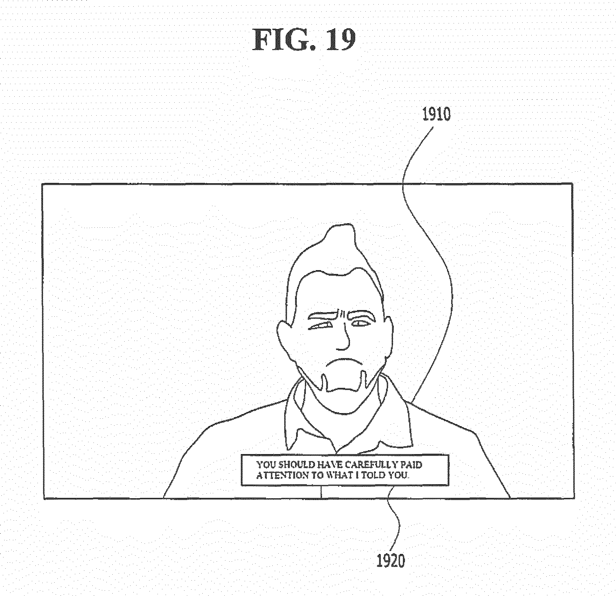

FIG. 19 is a diagram for describing an embodiment of a fourth lesson image among the embodiments of the present disclosure.

The fourth lesson image may include a consolation or reprimand image for a case in which the real player may not achieve the lesson target. The fourth lesson image may include an image which may be output when the real player may not make the result depending on the lesson. The fourth lesson image may include a phrase 1920 indicating that the virtual player 1910 reprimands the real player. Further, the fourth lesson image may include a phrase indicating that the virtual player consoles the real player. In FIG. 19, it is illustrated that the image in which the virtual player reprimands the real player is included, but the fourth lesson image is not limited thereto and may include a comparison image between the replay for the dart pin throwing of the real player and the correct throwing motion or include a predetermined image for encouraging achieving the lesson object of the real player, which includes a comparison image between the replay for the dart pin throwing and one or more lines matching the respective parts of the body of the player, and the like.

An embodiment of the present disclosure may be implemented even in the form of a recording medium including a command executable by a computer such as a program module executed by the computer. A computer readable medium may be a predetermined available medium accessible by the computer or includes all of volatile and non-volatile media and removable and irremovable media. Further, the computer readable media may include both computer storage media and communication media. The computer storage media include all of volatile and non-volatile and movable and non-movable media implemented by a predetermined method or technology for storing information such as a computer readable command, a data structure, a program module, or other data. The communication medium typically includes the computer readable command, the data structure, the program module, or other data of a modulated data signal such as a carrier, or other transmission mechanisms and includes a predetermined information transfer medium.

The aforementioned description of the present disclosure is used for exemplification, and it can be understood by those skilled in the art that the present disclosure can be easily modified in other detailed forms without changing the technical spirit or requisite features of the present disclosure. Therefore, it should be appreciated that the aforementioned embodiments are illustrative in all aspects and are not restricted. For example, respective constituent elements described as single types can be distributed and implemented, and similarly, constituent elements described to be distributed can also be implemented in a coupled form.

It will be appreciated by those skilled in the art that information and signals may be expressed by using various different predetermined technologies and techniques. For example, data, instructions, commands, information, signals, bits, symbols, and chips which may be referred in the above description may be expressed by voltages, currents, electromagnetic waves, magnetic fields or particles, optical fields or particles, or predetermined combinations thereof.

Those skilled in the art of the present disclosure will appreciate that various exemplary logic blocks, modules, processors, means, circuits, and algorithm steps described in association with the embodiments disclosed herein can be implemented by electronic hardware, various types of programs or design codes (designated as "software" herein for easy description), or a combination of all thereof. In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present disclosure may implement functions described by various methods with respect to each specific application, but it should not be analyzed that the implementation determination departs from the scope of the present disclosure.

Further, various embodiments presented herein may be implemented as manufactured articles using a method, an apparatus, or a standard programming and/or engineering technique. The term "manufactured article" includes a computer program, a carrier, or a medium which is accessible by a predetermined computer-readable device. For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information. The term "machine-readable media" include a wireless channel and various other media that can store, possess, and/or transfer command(s) and/or data, but are not limited thereto.

It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but it does not mean that the method claims are limited to the presented specific order or hierarchical structure.

The description of the presented embodiments is provided so that those skilled in the art of the present disclosure use or implement the present disclosure. Various modifications of the embodiments will be apparent to those skilled in the art and general principles defined herein can be applied to other embodiments without departing from the scope of the present disclosure. Therefore, the present disclosure is not limited to the embodiments presented herein, but should be analyzed within the widest range which is coherent with the principles and new features presented herein.

The scope of the present disclosure is represented by claims to be described below rather than the detailed description, and it is to be interpreted that the meaning and scope of the claims and all the changes or modified forms derived from the equivalents thereof come within the scope of the present disclosure.

### [Mode for Invention]

Related contents in the best mode for carrying out the present disclosure are described as above.

### [Industrial Applicability]

The present disclosure may be used in a digital device, a dart device, a dart game device, an entertainment device, a dart server, and the like.

## Claims

1. A dart game apparatus comprising:
a dart target including a bullseye disposed at the center, a plurality of concentric circles disposed around the bullseye and a plurality of regions divided by straight lines which extend radially from the bullseye;
a sensing unit sensing a hit location of a thrown dart pin;
a camera unit including a camera disposed to photograph at least a part of a dart game player;
a controller providing a lesson mode for a throwing motion of the dart game player and generating a lesson image for the throwing motion of the dart game player; and
a display unit outputting at least one of an image based on an image photographed by the camera unit and a lesson image associated with a lesson for the throwing motion of the dart game player.

2. The dart game apparatus of claim 1, wherein the dart game player includes at least one of at least one virtual player and at least one real player, and
the controller additionally provides a dart game match-up mode which a plurality of players including at least one virtual player and at least one real player is capable of performing and the lesson for the throwing motion is performed with respect to the throwing motion of at least one real player.

3. The dart game apparatus of claim 1, wherein the lesson image is a first lesson image including one or more predetermined lines for the lesson for the throwing motion in the image of the dart game player photographed by the camera unit.

4. The dart game apparatus of claim 3, wherein the one or more predetermined lines include at least one of a head circle matching a head of the dart game player, an arm line matching an arm of the dart game player, and an elbow line matching an elbow of the dart game player.

5. The dart game apparatus of claim 1, wherein the display unit displays an image acquired by adding the one or more lines which are capable of matching respective parts of a body of the dart game player with the one or more lines to the photographed image of the camera unit during photographing by the camera unit, and
the camera unit photographs at least a part of the dart game player so that the dart game player matches the respective parts of the body with the one or more lines.

6. The dart game apparatus of claim 1, wherein the display unit displays an image acquired by adding the one or more lines which are capable of matching respective parts of a body of the dart game player with the one or more lines to the photographed image of the camera unit, and
the dart game apparatus further includes a user input unit that allows the dart game player to adjust the one or more lines to match the respective parts of the body of the dart game player.

7. The dart game apparatus of claim 1, wherein the controller additionally analyzes a photographed image of the camera unit to extract the respective parts of the body of the dart game player and determine one or more lines matching the respective parts of the body.

8. The dart game apparatus of claim 7, wherein the controller additionally senses that the respective parts of the body of the dart game player, which constitute the throwing motion, deviate from the one or more lines and determines to output a feedback for the throwing motion of the dart game player.

9. The dart game apparatus of claim 8, wherein the feedback includes at least one of a second lesson image including a lesson image of a virtual player, which is associated with the lesson for the throwing motion of the dart game player, a replay image associated with the throwing motion of the dart game player, and a notice.

10. The dart game apparatus of claim 1, further comprising:
a user recognition unit identifying the dart game player.

11. The dart game apparatus of claim 10, wherein the controller
identifies a level of the identified dart game player and determines one or more virtual players matching the identified level,
determines whether the identified dart game player is a player having a predetermined qualification, and
generates the lesson image of the virtual player for the throwing motion of the dart game player when the identified dart game player is a player having the predetermined qualification.

12. The dart game apparatus of claim 11, wherein the lesson image is a second lesson image including the lesson image of the virtual player for the throwing motion of the dart game player.

13. The dart game apparatus of claim 1, wherein the controller additionally determines whether the dart game player achieves a predetermined object based on the hit location of the dart pin, which is sensed by the sensing unit and generates at least one of a third lesson image and a fourth lesson image for the throwing motion of the dart game player based on the determination result.

14. The dart game apparatus of claim 1, wherein the camera unit is disposed to photograph an upper body of the dart game player.

15. A method for providing a lesson mode for a throwing motion in a dart game apparatus, the method comprising:
providing the lesson mode for the throwing motion of a dart game player;
photographing at least a part of the dart game player;
generating a lesson image for the throwing motion of the dart game player; and
outputting at least one of an image based on the photographed image and the lesson image for the throwing motion of the dart game player.

16. A computer program stored on a computer readable recording medium, wherein the computer program includes the following commands for allowing a computer to provide a dart game lesson mode, and the commands comprise:
a command for providing a lesson mode for a throwing motion of a dart game player;
a command for photographing at least a part of the dart game player;
a command for generating a lesson image for the throwing motion of the dart game player; and
a command for outputting at least one of an image based on the photographed image and the lesson image for the throwing motion of the dart game player.
